# EUROPEAN PATENT APPLICATION

(11) **EP 4 787 069 A1**
(43) Date of publication of application: **05.08.2026**
(21) Application number: 26155983.5
(22) Date of filing: 03.02.2026
(51) Int. Cl.: G02F 1/313

(54) **PHOTONIC CIRCUIT WITH SIMPLIFIED COUPLER SWITCH FOR IMPLEMENTING MAPPING BETWEEN INPUT PORTS AND OUTPUT PORTS**

(30) Priority: 03.02.2025 KR 20250013281
(71) Applicant: Opticis Co., Ltd., Seongnam-si, Gyeonggi-do 13354 (KR)
(72) Inventor: KIM, Hee Dae, GWANGJU (KR)
(74) Representative: Lavoix

(57) **Abstract**

In an optical waveguide network connecting multiple input ports with multiple output ports, while implementing mapping set between the multiple input ports and the multiple output ports according to a control signal applied to a coupler switch to control transmission of optical power crossing between adjacent first and second optical waveguides forming the optical waveguide network, the transmission of optical power crossing between a pair of first optical waveguides and a pair of second optical waveguides connecting between the same display source and the same display sink may be controlled together from the same coupler switch to provide a main channel of relatively high transmission rate for transmitting an image signal between a display source and a display sink, and an auxiliary channel of relatively low transmission rate for transmitting an auxiliary signal for setting the main channel. Accordingly, provided is a photonic circuit in which the number of coupler switches for forming a flow of different optical power between the pair of first optical waveguides and the pair of second optical waveguides may be reduced by half, and an overall control structure including a control unit and a control line for generating a control signal and outputting the generated control signal may be simplified.

## Description

### CROSS-REFERENCE TO RELATED APPLICATION

This application is based on and claims priority under 35 U.S.C. §119 to Korean Patent Application No. 10-2025-0013281, filed on February 03, 2025, in the Korean Intellectual Property Office, the disclosure of which is incorporated by reference herein in its entirety.

### BACKGROUND

### 1. Field

The disclosure relates to a photonic circuit, and in particular, a photonic circuit for distributing or routing image data and auxiliary data about the setting of a channel for transmitting image data and image data between at least one or more display sources and at least one or more display sinks by using optical signals.

### 2. Description of the Related Art

In a method of implementing data routing or distribution between multiple inputs and outputs, a method of implementing data routing using electrical signals, such as in an Ethernet switch, has disadvantages of heat generation due to conduction of electrical signals and a relatively large energy consumption, due to the heat generation. Recently, research has been conducted on photonic circuits for transmitting or routing data by using optical signals rather than electrical signals as media for information transmission.

### SUMMARY

The disclosure provides a photonic circuit in which the number of coupler switches for implementing different optical power transmission between first and second optical waveguides that form an optical waveguide network is reduced to implement mapping set in the optical waveguide network that connects between multiple input ports and multiple output ports, and an overall control structure for generating and outputting control signals for the coupler switches is simplified.

Additional aspects will be set forth in part in the description which follows and, in part, will be apparent from the description, or may be learned by practice of the presented embodiments of the disclosure.

Provided is a photonic circuit including:
an optical fiber for transmitting an optical signal;
an optical waveguide network that forms a coupling with the optical fiber, and connects between an input port forming a transmitting end side and an output port forming a receiving end side opposite to the transmitting end side; and
a coupler switch for controlling the transmission or optical coupling of optical power crossing between adjacent first and second optical waveguides forming the optical waveguide network, the coupler switch being for implementing transmission of different optical power by controlling coupling efficiency between the first and second optical waveguides from an electrical input, the optical power having different states of a through or bar state in which there is substantially no crossing of optical power between the first and second optical waveguides, a splitting (dividing) or partial coupling state corresponding to some remaining and some crossing of optical power between the first and second optical waveguides, and a drop or cross state corresponding to full crossing of optical power between the first and second optical waveguides, wherein
the first optical waveguide includes a pair of a 1-1 optical waveguide and a 1-2 optical waveguide, the second optical waveguide includes a pair of a 2-1 optical waveguide and a 2-2 optical waveguide, and
the transmission of the optical power crossing between the 1-1 optical waveguide and the 2-1 optical waveguide and the transmission of the optical power crossing between the 1-2 optical waveguide and the 2-2 optical waveguide may be controlled together by the same coupler switch.

For example, the input port may include a grating coupler that forms a grating coupling with the optical fiber.

For example, the grating coupler may provide optical coupling from a core of a relatively wide optical fiber to a core of a relatively narrow optical waveguide.

For example, the optical fiber forms a vertical fiber coupling arranged in a downwardly inclined posture toward the grating coupler or forms a horizontal fiber coupling arranged parallel to the grating coupler, wherein an inclined surface for total internal reflection toward the grating coupler may be formed at an end of the optical fiber.

For example, the optical waveguide network connects between the input port and the output port, which are respectively formed in first and second side portions facing each other on a base substrate on which the optical waveguide network is formed, and
the first and second optical waveguides may include a coupling section in which the first and second optical waveguides extend parallel to each other at a relatively short distance position, and a phase transition section in which the first and second optical waveguides extend parallel to each other at a relatively long distance position, while extending from the input port toward the output port.

For example, in the phase transition section, the coupler switch may be formed on at least one of the first and second optical waveguides to set a voltage that induces a phase difference or phase mismatch between the first and second optical waveguides by applying an external electric field to the at least one of the first and second optical waveguides.

For example, the transmission or optical coupling efficiency of optical power crossing between the first and second optical waveguides in the coupling section may differ according to the phase difference or phase mismatch between the first and second optical waveguides caused by the voltage set from the coupler switch in the phase shift section.

For example, the coupler switch may receive first and second coupler control bits for applying three different levels of voltages to cause different degrees of phase difference or phase mismatch between the first and second optical waveguides to implement transmission of different optical power, the optical power having different states of through without crossing, some remaining and some crossing, and full crossing, between the first and second optical waveguides.

For example, according to a voltage set from the coupler switch,
i) as a zero voltage is set from the coupler switch, the transmission of optical power of a drop or cross corresponding to the full crossing of the optical power may be implemented between the first and second optical waveguides facing from the input port toward the output port,
ii) as a maximum voltage is set from the coupler switch, the transmission of optical power of a through or bar state without substantial crossing of optical power may be implemented between the first and second optical waveguides facing from the input port toward the output port, and
iii) as a voltage between the zero voltage and the maximum voltage is set from the coupler switch, the transmission of optical power of dividing corresponding to some remaining and some crossing of optical power may be implemented between the first and second optical waveguides facing from the input port toward the output port.

For example, in bit 0 of the first and second coupler control bits, transmission of optical power of a drop or cross corresponding to the full crossing of optical power may be implemented, while achieving a phase match between the first and second optical waveguides from the input port toward the output port,
in bit 1 of the first coupler control bit and bit 0 of the second coupler control bit, transmission of the optical power in a dividing or partial coupling state corresponding to some remaining and some crossing of the optical power may be implemented, while achieving a phase mismatch between the first and second optical waveguides from the input port toward the output port to partially block the transmission of the optical power, and
in bit 1 of the first and second coupler control bits, a through or bar state in which there is substantially no transmission of optical power may be implemented, while achieving a phase mismatch that fully blocks transmission of optical power between the first and second optical waveguides from the input port toward the output port.

For example, the optical waveguide network is an NxN optical waveguide network that maps N input ports and N output ports to each other,
the 1-1 optical waveguide and the 2-1 optical waveguide are optical waveguides extending adjacent to each other between two different input ports among the N input ports and two different output ports among the N output ports,
the 1-2 optical waveguide and the 2-2 optical waveguide are optical waveguides extending adjacent to each other between two other different input ports among the N input ports and two other different output ports among the N output ports, and
the flow of the optical power crossing between the 1-1 optical waveguide and the 2-1 optical waveguide and the flow of the optical power crossing between the 1-2 optical waveguide and the 2-2 optical waveguide may be controlled together by the same coupler switch.

For example, the pair of the 1-1 optical waveguide and the 1-2 optical waveguide, and the pair of the 2-1 optical waveguide and the 2-2 optical waveguide may connect between the input ports to which the same display source is connected and the output ports to which the same display sink is connected, respectively.

For example, the 1-1 optical waveguide and the 1-2 optical waveguide may transmit an image signal including image data and an auxiliary signal including auxiliary data between the same display source and the same display sink, and
the 2-1 optical waveguide and the 2-2 optical waveguide may transmit an image signal including other image data and an auxiliary signal including other auxiliary data between another same display source and another same display sink.

For example, the optical waveguide network may include a coupler switch including a movable coupler that connects the input port and the output port respectively formed on the first and second side portions that intersect to contact each other at one edge of the base substrate on which the optical waveguide network is formed, and that implements an approach/retreat operation in an approach/retreat direction along an approach direction toward the intersection point of the first optical waveguide and the second optical waveguide or a retreat direction away from the intersection point of the first optical waveguide and the second optical waveguide, so as to control transmission or optical coupling efficiency of optical power that intersects between the first optical waveguide connected to the input port and the second optical waveguide connected to the output port.

For example, the movable coupler may be configured to include:
i) at a first position farthest from the intersection point of the first and second optical waveguides, between the first waveguide connected to the input port and the second waveguide connected to the output port, implement the transmission of optical power of a through or bar state without a substantial cross of optical power;
ii) at a third position closest to the intersection point of the first and second optical waveguides, between the first waveguide connected to the input port and the second waveguide connected to the output port, implement the transmission of optical power of a drop or cross corresponding to full crossing of optical power; and
iii) at a second position between the first position farthest from the intersection point of the first and second optical waveguides and the third position closest to the intersection point, implement the transmission of optical power in a splitting (or dividing) or partial coupling state corresponding to some remaining and some crossing of the optical power.

For example, the coupler switch may receive first and second coupler control bits to apply three different levels of control voltages so that the movable coupler is set to a third position closest to the intersection point of the first and second optical waveguides from the first position farthest from the intersection point of the first and second optical waveguides.

For example, in bit 0 of the first and second coupler control bits, the movable coupler may be set to the first position farthest from the intersection point of the first and second optical waveguides,
in bit 1 of the first coupler control bit and bit 0 of the second coupler control bit, the movable coupler may be set to the second position from the intersection point of the first and second optical waveguides, and
in bit 1 of the first and second coupler control bits, the movable coupler may be set to the third position closest to the intersection point of the first and second optical waveguides.

For example, the movable coupler may be configured to include:
a first coupling rib extending in parallel with the first optical waveguide to form evanescent coupling with the first optical waveguide; and
a second coupling rib extending in parallel with the second optical waveguide to form evanescent coupling with the second optical waveguide.

For example, an evanescent field leaking between the first optical waveguide and the movable coupler may have an amplitude that decreases from the first optical waveguide toward the movable coupler, and
an evanescent field leaking between the second optical waveguide and the movable coupler may have an amplitude that decreases from the movable coupler toward the second optical waveguide.

For example, the optical waveguide network is an NxN optical waveguide network that maps N input ports and N output ports to each other,
and includes N 1-1 optical waveguides and 1-2 optical waveguides connected to the input ports and N 2-1 optical waveguides and 2-2 optical waveguides connected to the output ports, wherein
the flow of the optical power crossing between the 1-1 optical waveguide and the 2-1 optical waveguide and the flow of the optical power crossing between the 1-2 optical waveguide and the 2-2 optical waveguide may be controlled together by the same coupler switch.

For example, the pair of the 1-1 optical waveguide and the 1-2 optical waveguide, and the pair of the 2-1 optical waveguide and the 2-2 optical waveguide may connect between the input ports to which the same display source is connected and the output ports to which the same display sink is connected.

For example, the 1-1 optical waveguide and the 1-2 optical waveguide may transmit an image signal including image data and an auxiliary signal including auxiliary data from the same display source, and
the 2-1 optical waveguide and the 2-2 optical waveguide may transmit an image signal including image data and an auxiliary signal including auxiliary data toward the same display sink.

For example, the optical waveguide network is a 2Nx2N optical waveguide network that maps 2N input ports and 2N output ports to each other,
the input ports and the display source form a 2:1 connection so that image signals and auxiliary signals output from N display sources are input to the 2N input ports,
the output ports and the display sink form a 2:1 connection so that image signals and auxiliary signals are output toward the N display sinks in the 2N output ports, and
a pair of the image signal and the auxiliary signal input through the input ports connected to the same display source may be routed or distributed toward the output ports connected to the same display sink according to a control signal applied to the coupler switch, to implement transmission of different optical power between the first and second optical waveguides which are adjacent to each other and form the optical waveguide network between the input port and the output port.

For example, the image signal is transmitted at a relatively high data transmission rate, and
the auxiliary signal may be transmitted at a relatively low data transmission rate.

For example, the optical waveguide forming the optical waveguide network may provide communication channels of at least two or more different wavelength bands.

For example, the optical waveguide that forms the optical waveguide network has a profile of an optical gain or optical loss with a full-width at half maximum (FWHM) attenuated by half of the peak value of the center wavelength band from the center wavelength band forming a single peak toward both sides, and
the optical waveguide may transmit different optical signals together in wavelength bands spaced apart from each other with a wavelength separation band therebetween considering a resolution for separation between different wavelength bands forming different communication channels to prevent cross-talk with each other within a wavelength range forming the FWHM.

For example, the different optical signals transmitted together through the optical waveguide may include optical signals at different transmission rates.

For example, the different optical signals transmitted together through the optical waveguide include a first optical signal transmitted at a relatively high speed and a second optical signal transmitted at a relatively low speed, and
in the profile of the optical gain or optical loss of the optical waveguide, a wavelength band of the first optical signal may be relatively adjacent to a center wavelength band having a peak value, to have a low attenuation rate, and a wavelength band of the second optical signal may be relatively far away from a center wavelength band having a peak value, to have a high attenuation rate.

For example, the resolution for separation between different wavelength bands that form the different communication channels may correspond to the resolution of a wavelength selection filter for separating optical signals of different wavelength bands transmitted from the same optical waveguide, or a sum of the resolution of the wavelength selection filter and the marginal tolerance.

For example, the optical waveguide that forms the optical waveguide network may transmit four different optical signals together in different wavelength bands spaced apart from each other with a wavelength separation band therebetween within the wavelength range that forms the FWHM.

For example, the four different optical signals transmitted together through the optical waveguide may
form a first high speed channel and a second high speed channel that transmit at relatively high speed, and a first low speed channel and a second low speed channel that transmit at relatively low speed, wherein,
in the profile of the optical gain or optical loss of the optical waveguide,
the wavelength bands of the optical signals allocated to the first and second high speed channels may be relatively adjacent to the center wavelength band with a peak value, to have a low attenuation rate, and
the wavelength bands of the optical signals allocated to the first and second low speed channels may be relatively far away from the center wavelength band with the peak value, to have a high attenuation rate.

For example, the wavelength bands of the optical signals allocated to the first and second high speed channels may be allocated symmetrically to the center wavelength band with the peak value, and
the wavelength bands of the optical signals allocated to the first and second low speed channels may be allocated symmetrically to the center wavelength band with the peak value.

For example, the optical waveguide that forms the optical waveguide network may transmit three different optical signals together in different wavelength bands spaced apart from each other with a wavelength separation band therebetween within the wavelength range that forms the FWHM.

For example, the three different optical signals transmitted together through the optical waveguide may
form a first high speed channel and a second high speed channel that transmit at relatively high speed, and a low speed channel that transmits at relatively low speed, wherein,
in the profile of the optical gain or optical loss of the optical waveguide,
the wavelength band of the optical signal allocated to the second high speed channel may be adjacent closest to the center wavelength band with a peak value, to have a lowest attenuation rate, and
the wavelength band of the optical signal allocated to the low speed channel may be spaced apart farthest from the center wavelength band with the peak value, to have a highest attenuation rate, and
the wavelength band of the optical signal allocated to the first high speed channel may be farther than the wavelength band of the optical signal allocated to the second high speed channel from the center wavelength band having a peak value, but may be closer to the wavelength band of the optical signal allocated to the low speed channel, to thereby have a moderate attenuation rate.

For example, the wavelength band of the optical signal allocated to the first high speed channel, the wavelength band of the optical signal allocated to the second high speed channel, and the wavelength band of the optical signal allocated to the low speed channel may be allocated at positions asymmetrical to each other with respect to the center wavelength band with the peak value,
the wavelength band of the optical signal allocated to the second high speed channel and the wavelength band of the optical signal allocated to the low speed channel may be allocated to the wavelength range of one area of a left-half region and a right-half region around the center wavelength band with the peak value, and
the wavelength band of the optical signal allocated to the first high speed channel may be allocated in a wavelength range of the other area among the left-half region and the right-half region around a center wavelength band having the peak value.

### BRIEF DESCRIPTION OF THE DRAWINGS

The above and other aspects, features, and advantages of certain embodiments of the disclosure will be more apparent from the following description taken in conjunction with the accompanying drawings, in which:

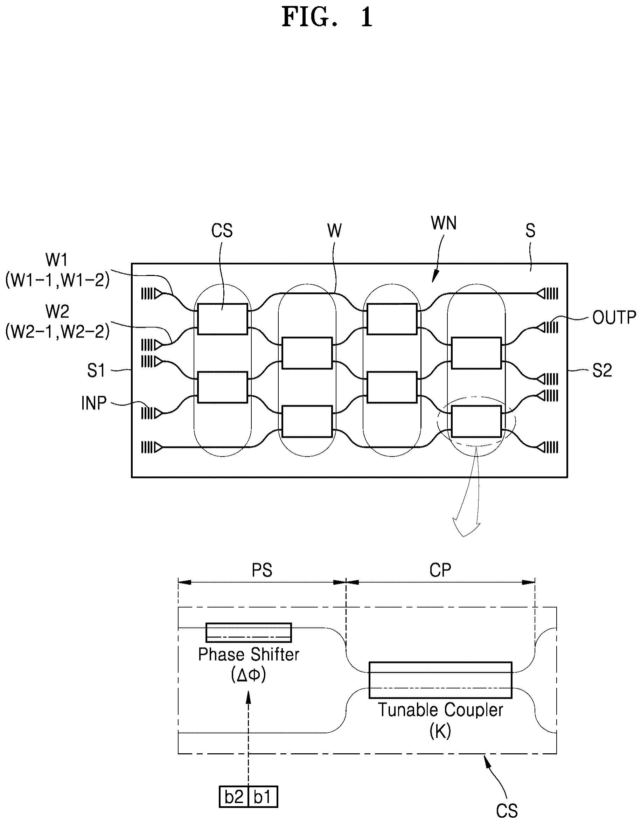

FIG. 1 is a diagram for explaining a configuration, according to a first aspect of the disclosure, including an optical waveguide network WN connecting between a plurality of input ports INP and a plurality of output ports OUTP and coupler switches CS for implementing transmission of different optical power between adjacent optical waveguides W that form the optical waveguide network WN to implement mapping set between the plurality of input ports INP and the plurality of output ports OUTP;

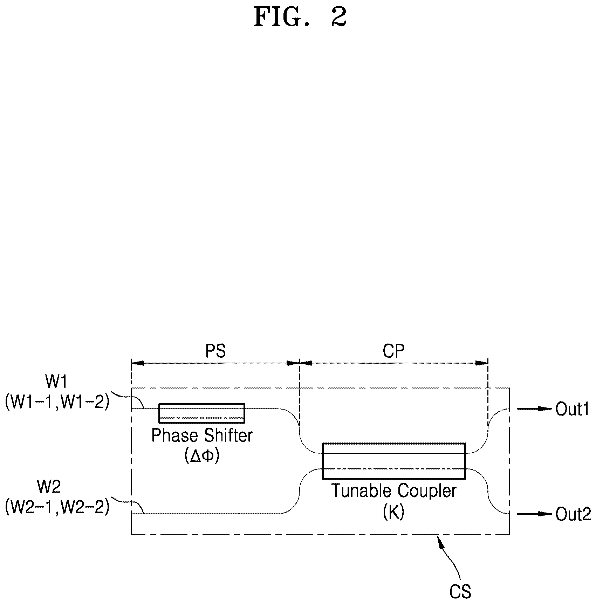

FIG. 2 is a diagram for explaining the configuration of the coupler switch CS shown in FIG. 1, in which the configuration of the coupler switch CS includes a phase shifter (PS) section and a tunable coupler (CP) section;

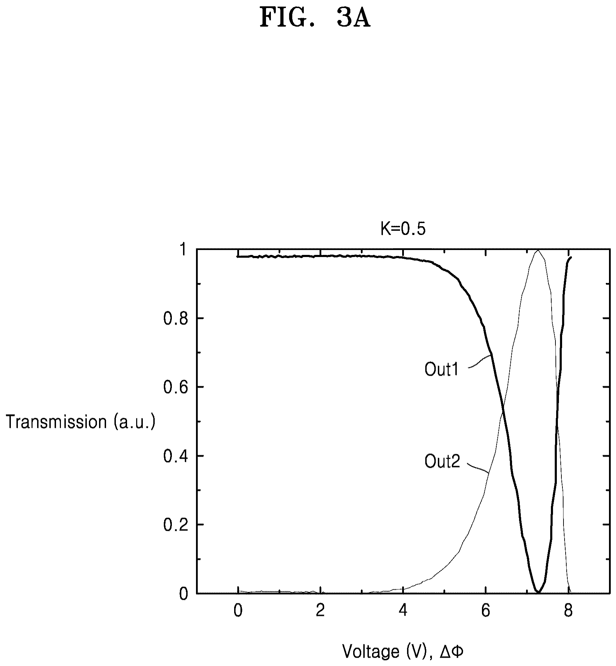

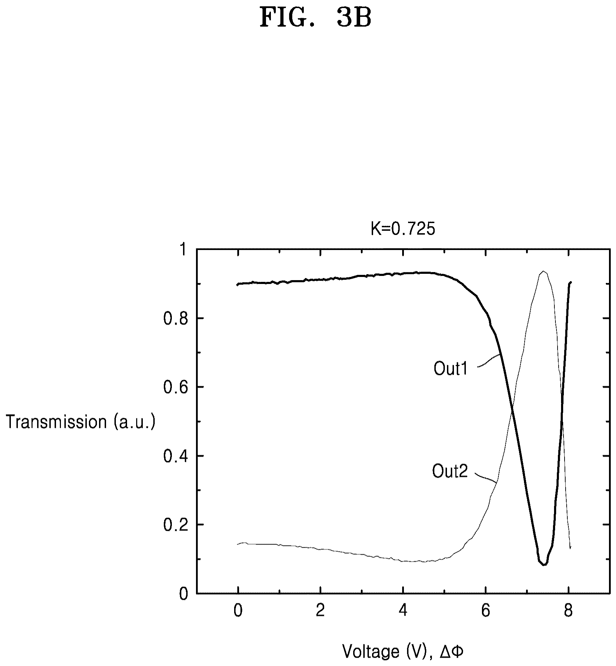

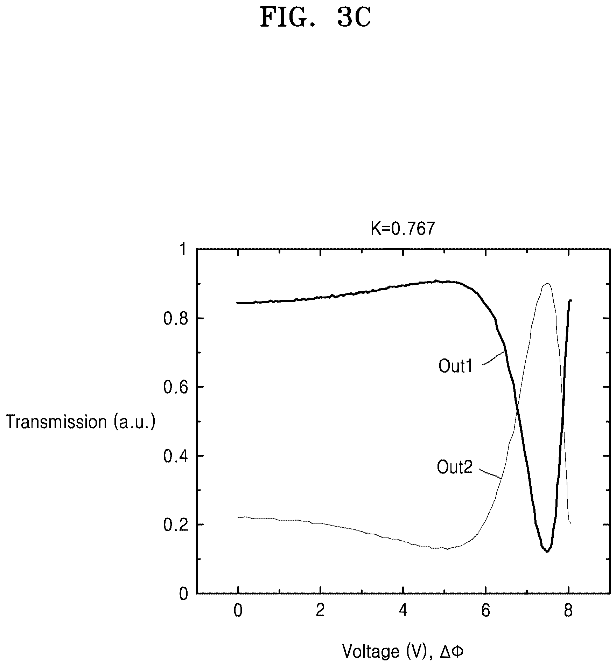

FIGS. 3A to 3C are diagrams for explaining the ratio of optical power Out1 and Out2 (see FIG. 2) crossing between first and second optical waveguides W1 and W2 according to the magnitude of the voltage set by a coupler switch CS or a phase difference Δφ or phase mismatch Δφ caused between the first and second optical waveguides W1 and W2 from the set voltage, which show respectively different diagrams for explaining the ratio of optical power Out1 and Out2 (see FIG. 2) crossing between first and second optical waveguides W1 and W2 according to the magnitude of the voltage set by the coupler switch CS or a phase difference Δφ or phase mismatch Δφ caused between the first and second optical waveguides W1 and W2 from the magnitude of the set voltage;

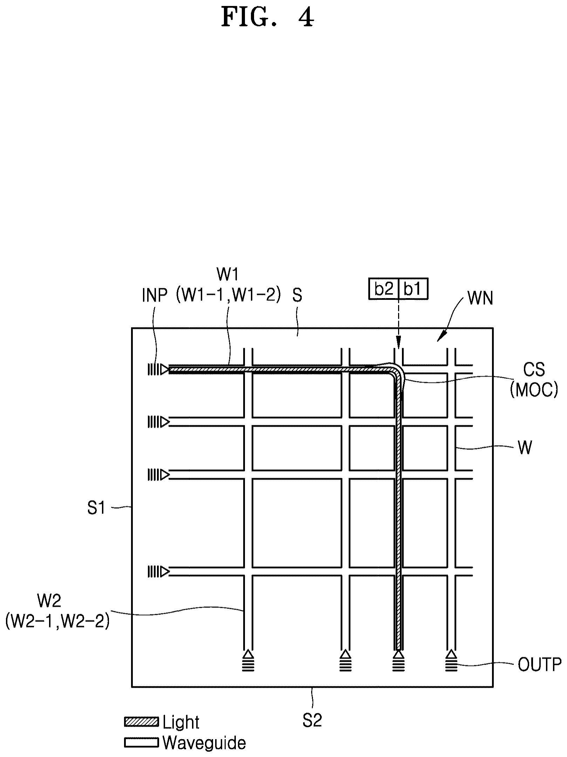

FIG. 4 is a diagram for explaining a configuration, according to a second aspect of the disclosure, including an optical waveguide network WN connecting between a plurality of input ports INP and a plurality of output ports OUTP and coupler switches CS for implementing transmission of different optical power between adjacent optical waveguides W that form the optical waveguide network WN to implement mapping set between the plurality of input ports INP and the plurality of output ports OUTP;

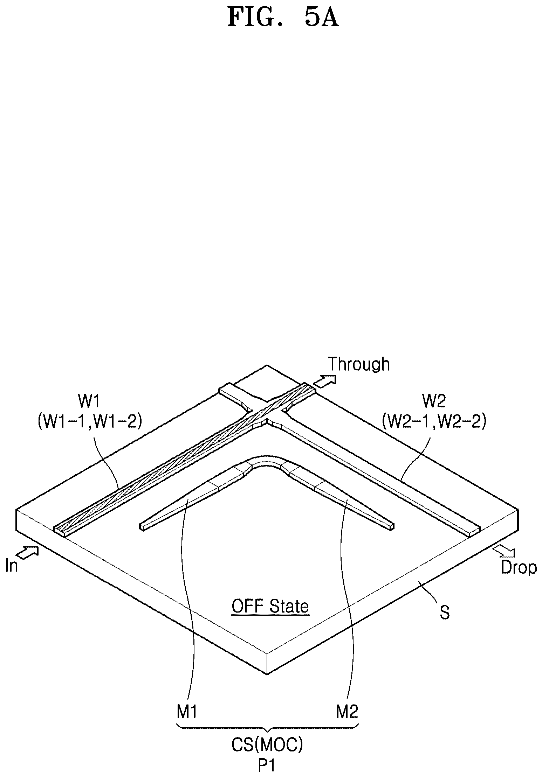

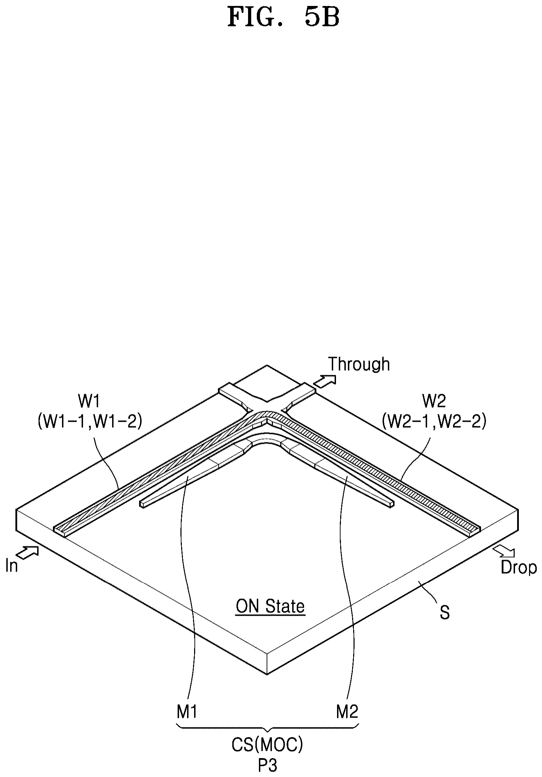

FIGS. 5A and 5B are diagrams for explaining the operation of the coupler switch CS that implements the transmission of different optical power between neighboring optical waveguides W forming the optical waveguide network WN according to the different first and third positions P1 and P3 set in the movable coupler MOC of the coupler switch CS shown in FIG. 4, which show different diagrams for explaining a through or bar state or an OFF state of the coupler switch CS in which the optical power do not cross between the first and second optical waveguides W1 and W2 adjacent to each other at the first position P1 of the movable coupler MOC, and a drop or cross state or an ON state of the coupler switch CS in which the optical power fully cross between the first and second optical waveguides W1 and W2 adjacent to each other at the third position P3 of the movable coupler MOC;

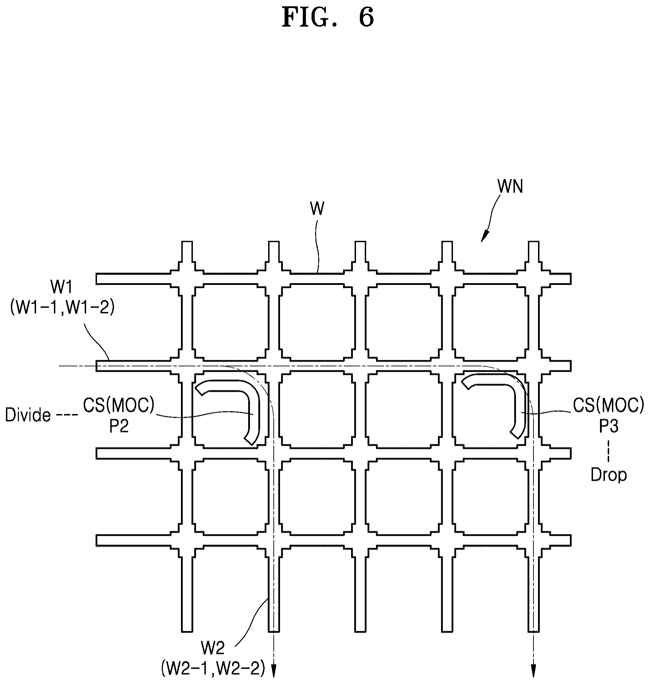

FIG. 6 is a diagram for explaining the operation of the coupler switch CS that implements the transmission of different optical power between neighboring optical waveguides W forming the optical waveguide network WN according to the different second and third positions P2 and P3 set in the movable coupler MOC of the coupler switch CS shown in FIG. 4, which shows a diagram for explaining a dividing or partial coupling state in which some of the optical power remain and some of the optical power cross between the adjacent first and second optical waveguides W1 and W2 at the second position P2 of the movable coupler MOC, and a drop or cross state in which the optical power fully cross between the adjacent first and second optical waveguides W1 and W2 at the third position P3 of the movable coupler MOC;

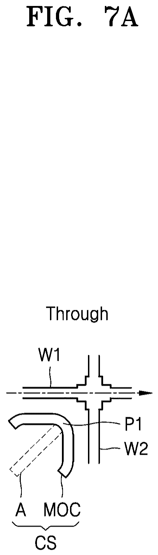

FIGS. 7A to 7C are diagrams for explaining the operation of the coupler switch CS that implements the transmission of different optical power between neighboring optical waveguides W forming the optical waveguide network WN according to the different first to third positions P1, P2, and P3 set in the movable coupler MOC of the coupler switch CS shown in FIG. 4, which show diagrams for explaining a through or bar state in which no crossing of optical power occurs between adjacent first and second optical waveguides W1 and W2) at the first position P1 of the movable coupler MOC, a dividing or partial coupling state in which some of the optical power remain and some of the optical power cross between adjacent first and second optical waveguides W1 and W2 at the second position P2, and a drop or cross state in which the optical power fully cross between adjacent first and second optical waveguides W1 and W2 at the third position P3 of the movable coupler MOC;

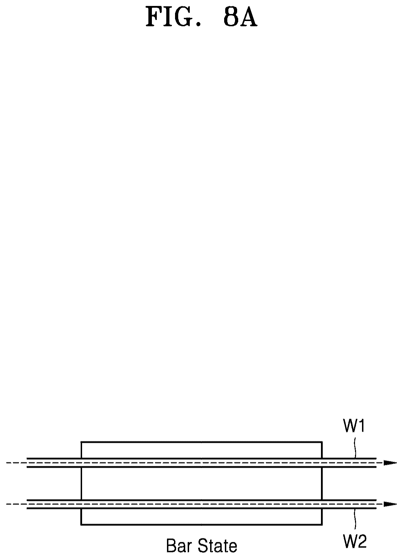

FIGS. 8A to 8C are diagrams for explaining three different states of transmission of optical power crossing between adjacent first and second optical waveguides W1 and W2 forming an optical waveguide network WN, which are three different states set from a coupler switch CS, which show different diagrams for explaining a bar state having no transmission of optical power crossing between the first and second optical waveguides W1 and W2, a partial coupling in which some remaining and some crossing state of optical power are performed between the first and second optical waveguides W1 and W2, and a cross state in which optical power fully cross between the first and second optical waveguides W1 and W2;

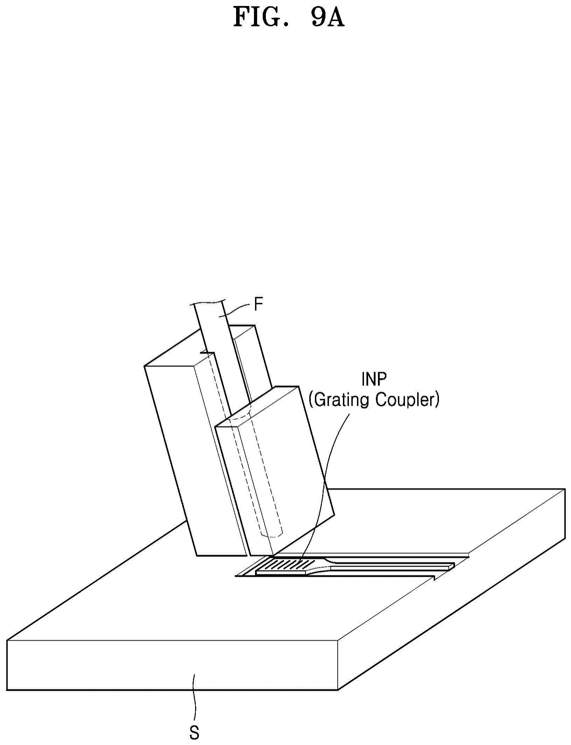

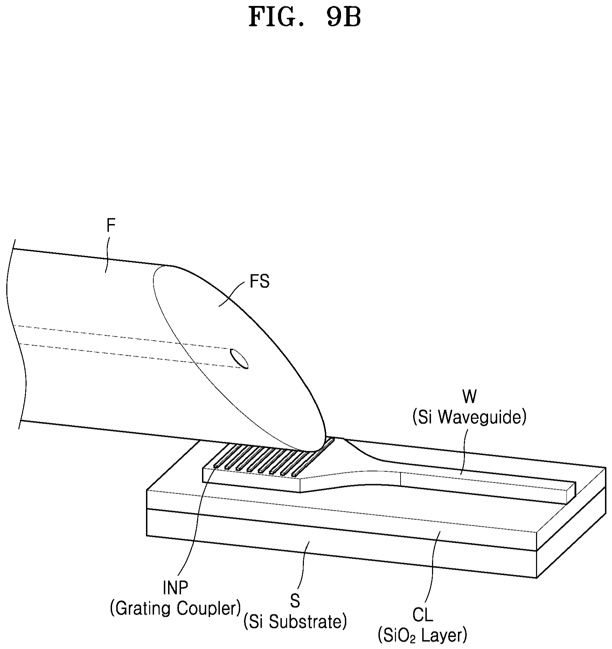

FIGS. 9A and 9B are diagrams for explaining a grating coupling between an optical fiber F through which an optical signal is transmitted and an input port INP (a grating coupler), which show different diagrams for explaining a vertical fiber coupling and a horizontal fiber coupling arranged in an orientation of different optical fibers F for the input port INP, respectively;

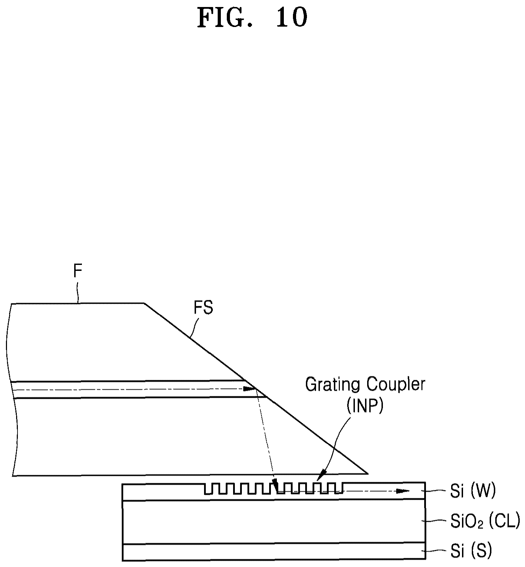

FIG. 10 is a diagram for explaining grating coupling between the optical fiber F and the input port INP in the horizontal fiber coupling shown in FIG. 9B;

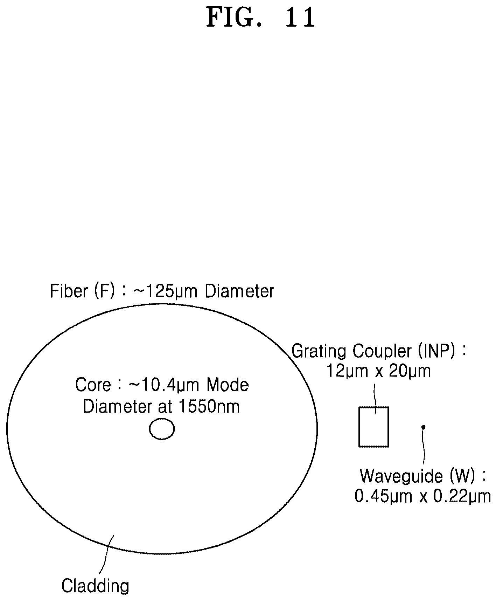

FIG. 11 is a diagram for explaining a configuration of an input port INP or a grating coupler of the input port INP that implements coupling between a core of an optical fiber F having a relatively large cross-sectional area and an optical waveguide W having a relatively small cross-sectional area;

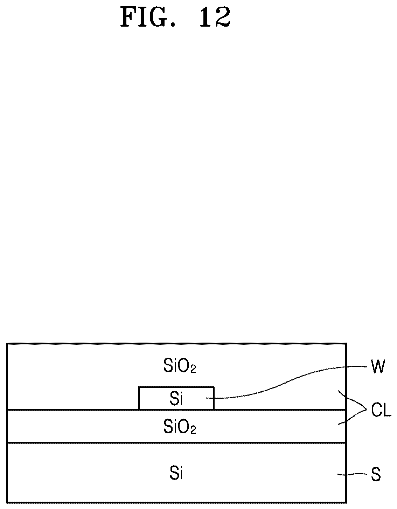

FIG. 12 is a cross-sectional view for explaining a configuration of a base substrate S (Si), a bottom oxide BOX (SiO₂) on the base substrate S (Si), and an optical waveguide (Si) and a cladding CL (SiO₂) filling the optical waveguide (Si) on the bottom oxide (SiO₂) in a silicon-based silicon photonic circuit;

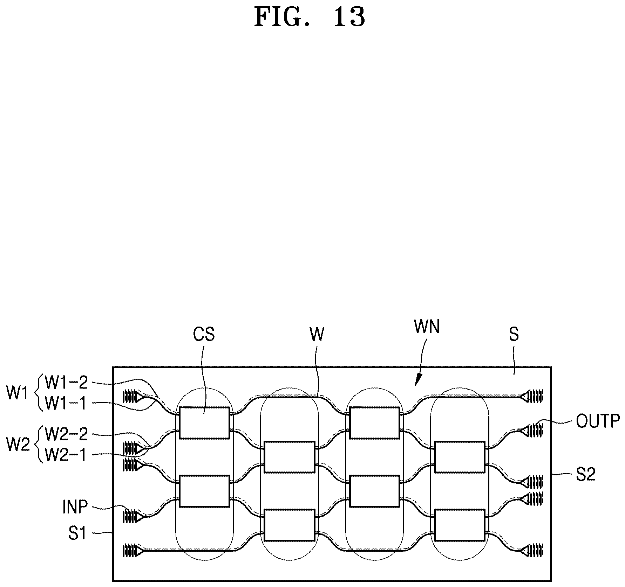

FIG. 13 is a diagram for explaining a stack structure, according to a first aspect of the disclosure, in which a pair of a 1-1 optical waveguide W1-1 and a 1-2 optical waveguide W1-2 forming a first optical waveguide W1 connected to the same display source and a pair of a 2-1 optical waveguide W2-1 and a 2-2 optical waveguide W2-2 forming a second optical waveguide W2 connected to the same display sink are vertically arranged with each other, which shows a diagram for explaining a coupler switch CS configured or interlocked together to set the same state (bar, partial coupling, and cross states) for the transmission of optical power crossing between the 1-1 optical waveguide W1-1 and the 2-1 optical waveguide W2-1 and between the 1-2 optical waveguide W1-2 and the 2-2 optical waveguide W2-2;

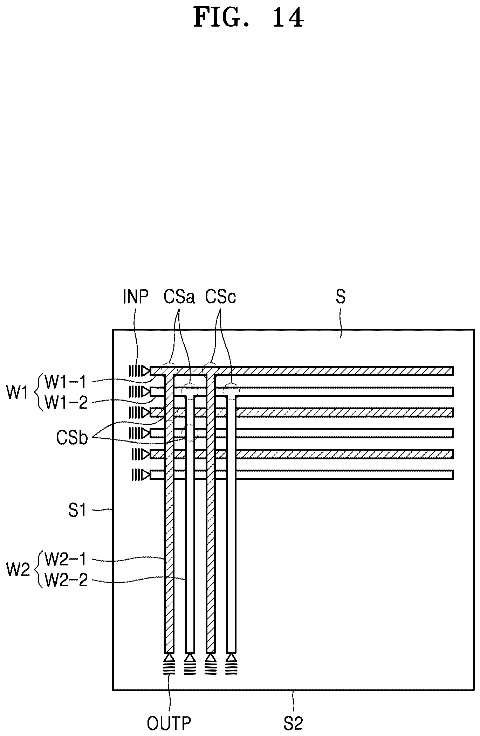

FIG. 14 is a diagram for explaining an interleave structure, according to a second aspect of the disclosure, in which a pair of a 1-1 optical waveguide W1-1 and a 1-2 optical waveguide W1-2 forming a first optical waveguide W1 connected to the same display source and a pair of a 2-1 optical waveguide W2-1 and a 2-2 optical waveguide W2-2 forming a second optical waveguide W2 connected to the same display sink are horizontally arranged with each other, which shows a diagram for explaining coupler switches CSa. CSb, and CSc configured or interlocked together to set the same state (bar, partial coupling, and cross state) for the transmission of optical power crossing between the 1-1 optical waveguide W1-1 and the 2-1 optical waveguide W2-1 and between the 1-2 optical waveguide W1-2 and the 2-2 optical waveguide W2-2;

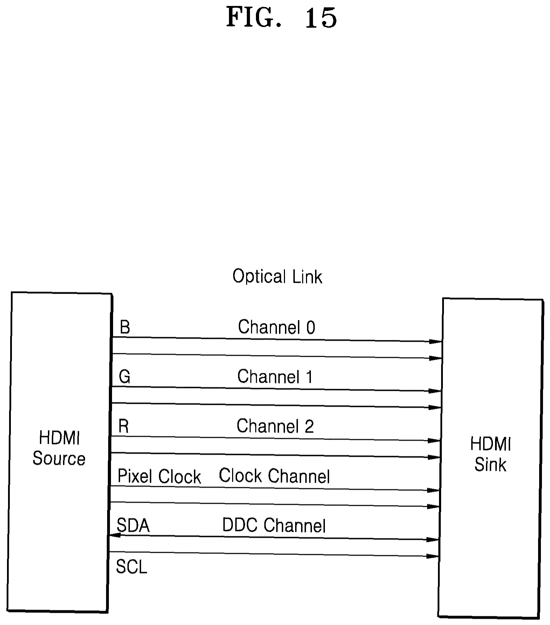

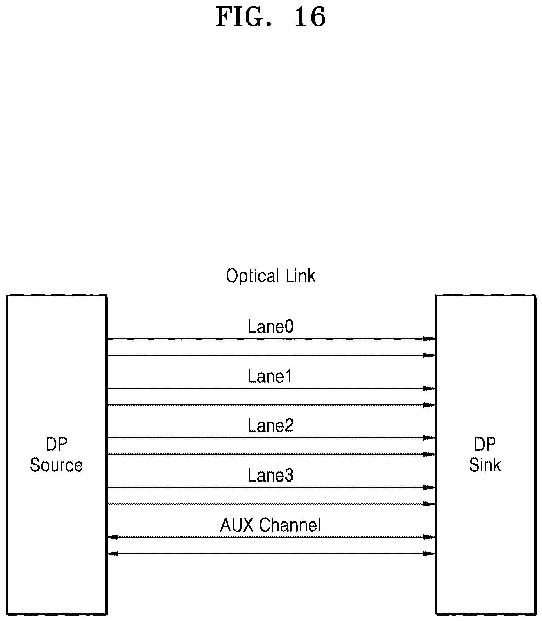

FIGS. 15 and 16 are different diagrams for explaining four main channels (Channel 0, 1, 2, Clock Channel, Lane 0, 1, 2, 3) of a high speed transmission rate set between a display source and a display sink and two auxiliary channels (SDA, SCL, AUX Channel) of a low speed transmission rate, respectively, in transmission of an HDMI and transmission of a display port;

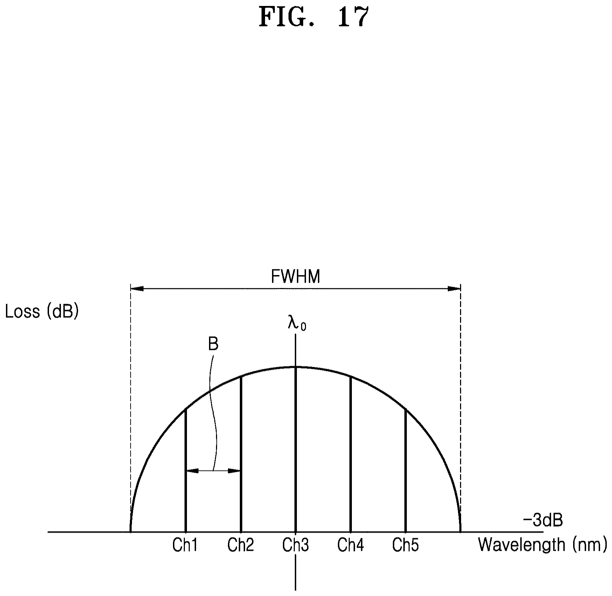

FIG. 17 is a diagram for explaining that optical signals of different wavelength bands are allocated to five channels allocated to an optical waveguide W in an embodiment of the disclosure;

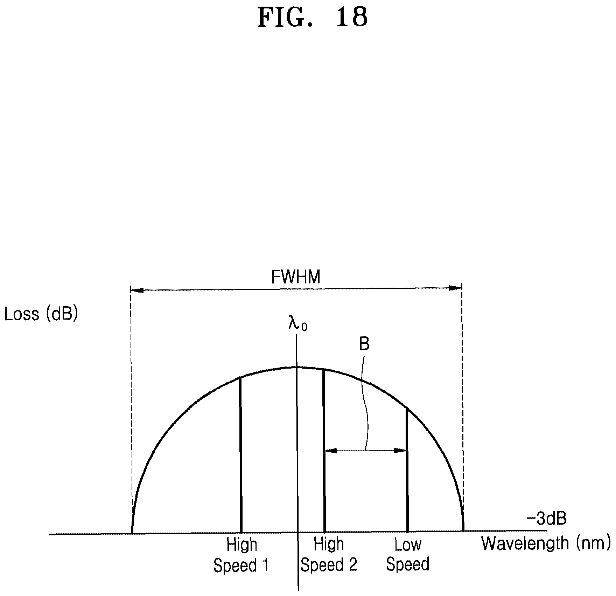

FIG. 18 is a diagram, in an embodiment of the disclosure, for explaining that optical signals of different wavelength bands are allocated to three channels allocated to an optical waveguide W, that is, two channels of high speed transmission rate and one channel of low speed transmission rate, according to respective transmission rates;

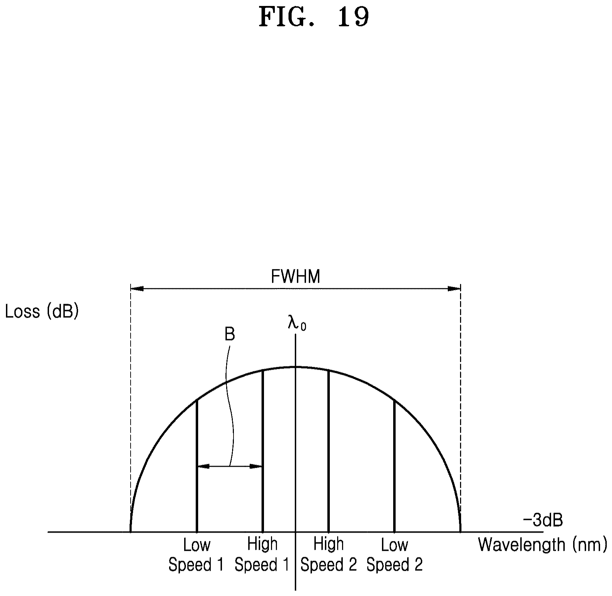

FIG. 19 is a diagram, in an embodiment of the disclosure, for explaining that optical signals of different wavelength bands are allocated to four channels allocated to an optical waveguide W, that is, two channels of high speed transmission rate and two channels of low speed transmission rate, according to respective transmission rates;

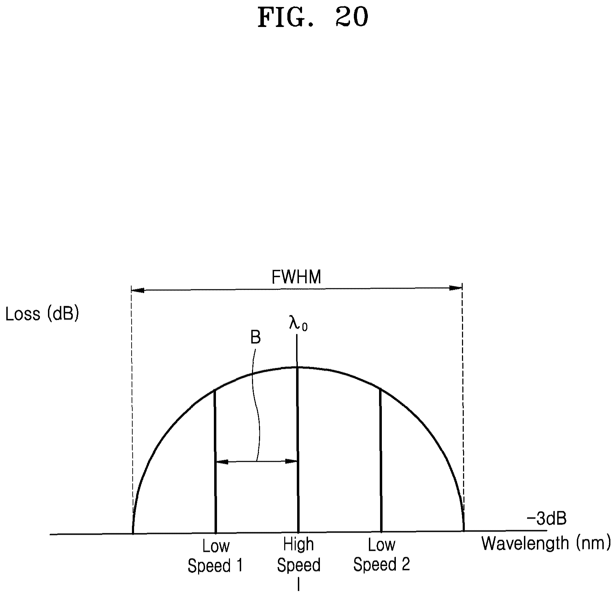

FIG. 20 is a diagram, in an embodiment of the disclosure, for explaining that optical signals of different wavelength bands are allocated to three channels allocated to an optical waveguide W, that is, one channel of high speed transmission rate and two channels of low speed transmission rate, according to respective transmission rates;

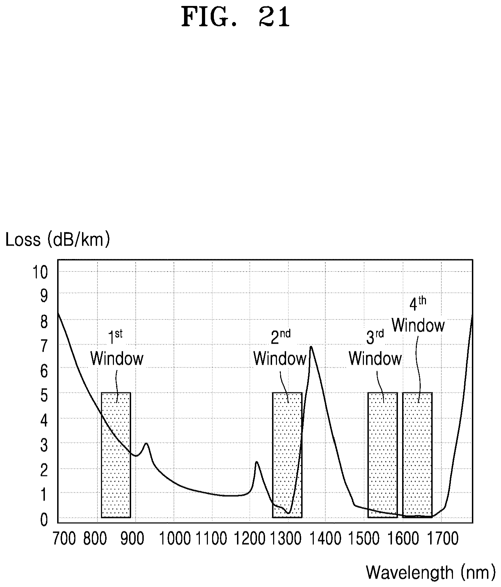

FIG. 21 shows a profile showing optical loss or attenuation according to the wavelength of an optical fiber F (that is, silica-based optical fiber);

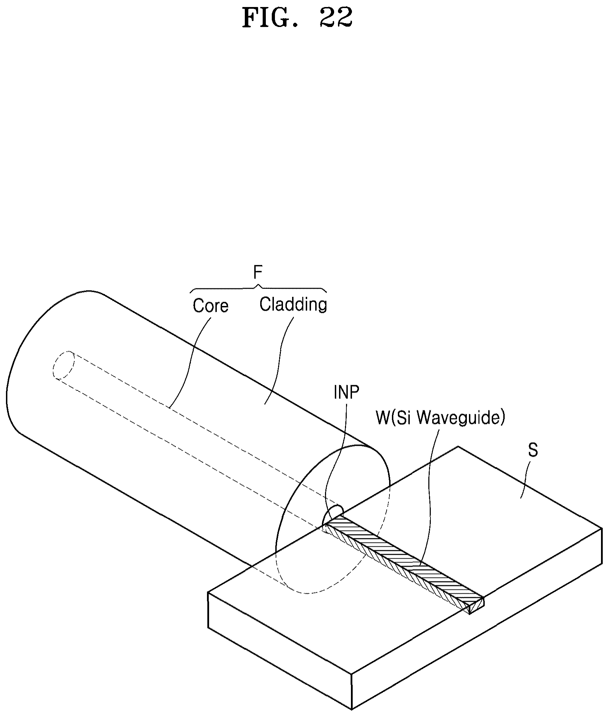

FIG. 22 is a diagram for explaining an edge coupling between an optical fiber F through which an optical signal is transmitted and an input port INP (an edge coupler), which shows a diagram for explaining edge coupling different from the grating coupling or surface coupling shown in FIGS. 9A and 9B; and

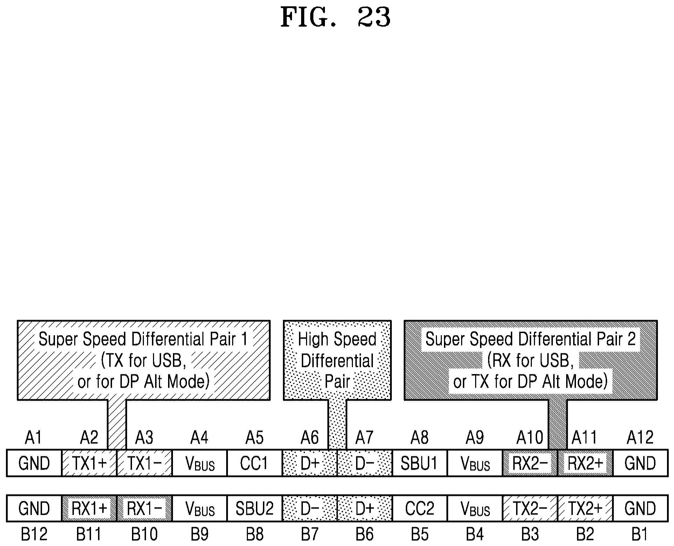

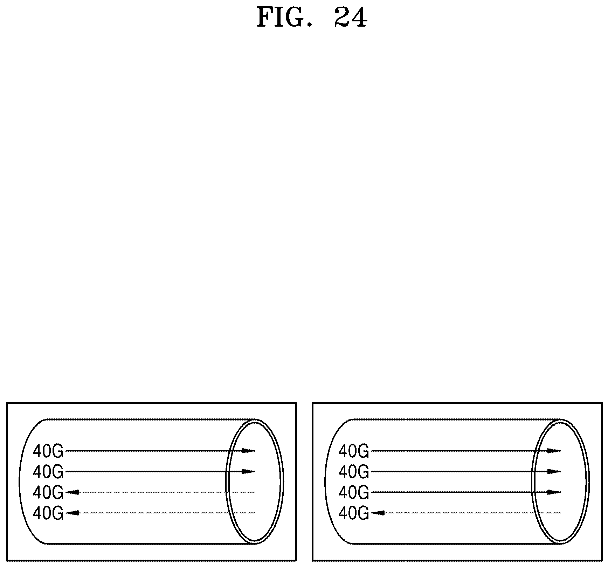

FIGS. 23 and 24 are diagrams for explaining USB communication and Thunderbolt communication as an embodiment of different communication protocols to which an optical waveguide network WN of the disclosure may be applied.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a photonic circuit according to a preferred embodiment of the disclosure will be described with reference to the accompanying drawings.

FIG. 1 is a diagram for explaining a configuration, according to a first aspect of the disclosure, including an optical waveguide network WN connecting between a plurality of input ports INP and a plurality of output ports OUTP and coupler switches CS for implementing transmission of different optical power between adjacent optical waveguides W that form the optical waveguide network WN to implement mapping set between the plurality of input ports INP and the plurality of output ports OUTP.

FIG. 2 is a diagram for explaining the configuration of the coupler switch CS shown in FIG. 1, in which the configuration of the coupler switch CS includes a phase shifter section (PS) and a coupling (or tunable coupler) section (CP).

FIGS. 3A to 3C are diagrams for explaining the ratio of optical power Out1 and Out2 (see FIG. 2) crossing between first and second optical waveguides W1 and W2 according to the magnitude of the voltage set by a coupler switch CS or a phase difference Δφ or phase mismatch Δφ caused between the first and second optical waveguides W1 and W2 from the set voltage, which show respectively different diagrams for explaining the ratio of optical power Out1 and Out2 (see FIG. 2) crossing between first and second optical waveguides W1 and W2 according to the magnitude of the voltage set by the coupler switch CS or a phase difference Δφ or phase mismatch Δφ caused between the first and second optical waveguides W1 and W2 from the magnitude of the set voltage.

FIG. 4 is a diagram for explaining a configuration, according to a second aspect of the disclosure, including an optical waveguide network WN connecting between a plurality of input ports INP and a plurality of output ports OUTP and coupler switches CS for implementing transmission of different optical power between adjacent optical waveguides W that form the optical waveguide network WN to implement mapping set between the plurality of input ports INP and the plurality of output ports OUTP.

FIGS. 5A and 5B are diagrams for explaining the operation of the coupler switch CS that implements the transmission of different optical power between neighboring optical waveguides W forming the optical waveguide network WN according to the different first and third positions P1 and P3 set in the movable coupler MOC of the coupler switch CS shown in FIG. 4, which show different diagrams for explaining a through or bar state or an OFF state of the coupler switch CS in which the optical power do not cross between the first and second optical waveguides W1 and W2 adjacent to each other at the first position P1 of the movable coupler MOC, and a drop or cross state or an ON state of the coupler switch CS in which the optical power fully cross between the first and second optical waveguides W1 and W2 adjacent to each other at the third position P3 of the movable coupler MOC.

FIG. 6 is a diagram for explaining the operation of the coupler switch CS that implements the transmission of different optical power between neighboring optical waveguides W forming the optical waveguide network WN according to the different second and third positions P2 and P3 set in the movable coupler MOC of the coupler switch CS shown in FIG. 4, which shows a diagram for explaining a dividing or partial coupling state in which some of the optical power remain and some of the optical power cross between the adjacent first and second optical waveguides W1 and W2 at the second position P2 of the movable coupler MOC, and a drop or cross state in which the optical power fully cross between the adjacent first and second optical waveguides W1 and W2 at the third position P3 of the movable coupler MOC.

FIGS. 7A to 7C are diagrams for explaining the operation of the coupler switch CS that implements the transmission of different optical power between neighboring optical waveguides W forming the optical waveguide network WN according to the different first to third positions P1, P2, and P3 set in the movable coupler MOC of the coupler switch CS shown in FIG. 4, which show diagrams for explaining a through or bar state in which no crossing of optical power occurs between adjacent first and second optical waveguides W1 and W2) at the first position P1 of the movable coupler MOC, a dividing or partial coupling state in which some of the optical power remain and some of the optical power cross between adjacent first and second optical waveguides W1 and W2 at the second position P2, and a drop or cross state in which the optical power fully cross between adjacent first and second optical waveguides W1 and W2 at the third position P3 of the movable coupler MOC.

FIGS. 8A to 8C are diagrams for explaining three different states of transmission of optical power crossing between adjacent first and second optical waveguides W1 and W2 forming an optical waveguide network WN, which are three different states set from a coupler switch CS, which show different diagrams for explaining a bar state having no transmission of optical power crossing between the first and second optical waveguides W1 and W2, a partial coupling in which some remaining and some crossing of optical power are performed between the first and second optical waveguides W1 and W2, and a cross state in which optical power fully cross between the first and second optical waveguides W1 and W2.

FIGS. 9A and 9B are diagrams for explaining a grating coupling between an optical fiber F through which an optical signal is transmitted and an input port INP (a grating coupler), which show different diagrams for explaining a vertical fiber coupling and a horizontal fiber coupling arranged in an orientation of different optical fibers F for the input port INP, respectively.

FIG. 10 is a diagram for explaining grating coupling between the optical fiber F and the input port INP in the horizontal fiber coupling shown in FIG. 9B.

FIG. 11 is a diagram for explaining a configuration of an input port INP or a grating coupler of the input port INP that implements coupling between a core of an optical fiber F having a relatively large cross-sectional area and an optical waveguide W having a relatively small cross-sectional area.

FIG. 12 is a cross-sectional view for explaining a configuration of a base substrate S (Si), a bottom oxide BOX (SiO₂) on the base substrate S (Si), and an optical waveguide (Si) and a cladding CL (SiO₂) filling the optical waveguide (Si) on the bottom oxide (SiO₂) in a silicon-based silicon photonic circuit.

A photonic circuit according to an embodiment of the disclosure includes:
an optical fiber F for transmitting an optical signal;
an optical waveguide network WN that forms a coupling (grating coupling) with the optical fiber F, and that connects between an input port INP forming a transmitting end side and an output port OUTP forming a receiving end side opposite to the transmitting end side; and
a coupler switch CS for controlling the transmission or optical coupling of optical power crossing between adjacent first and second optical waveguides W1 and W2 forming the optical waveguide network WN, the coupler switch for implementing transmission of different optical power by controlling coupling efficiency between the first and second optical waveguides W1 and W2 from an electrical input, the optical power having different states of a through or bar state in which there is substantially no crossing of optical power between the first and second optical waveguides W1 and W2, a splitting (dividing) or partial coupling state corresponding to some remaining and some crossing of optical power between the first and second optical waveguides W1 and W2, and a drop or cross state corresponding to full crossing of optical power between the first and second optical waveguides W1 and W2, wherein
the first optical waveguide W1 includes a pair of a 1-1 optical waveguide W1-1 and a 1-2 optical waveguide W1-2, the second optical waveguide W2 includes a pair of a 2-1 optical waveguide W2-1 and a 2-2 optical waveguide W2-2, and
the flow of the optical power crossing between the 1-1 optical waveguide W1-1 and the 2-1 optical waveguide W2-1 and the flow of the optical power crossing between the 1-2 optical waveguide W1-2 and the 2-2 optical waveguide W2-2 are controlled together from the same coupler switch CS.

In an embodiment of the disclosure, an input port INP through which an optical signal is input from an optical fiber F, an output port OUTP through which an optical signal is output, an optical waveguide network WN that connects between the input port INP and the output port OUTP according to set mapping, and a coupler switch CS for implementing the set mapping between the input port INP and the output port OUTP by controlling transmission or optical coupling efficiency of optical power between different optical waveguides W forming the optical waveguide network WN may be formed together on a base substrate S (for example, a silicon substrate) forming a common support base.

In an embodiment of the disclosure, the input port INP may include a grating coupler that forms a grating coupling with the optical fiber F. In various embodiments of the disclosure, depending on the type of grating coupling according to the arrangement between the input port INP and the optical fiber F, the optical fiber F may form a vertical fiber coupling with the base substrate S on which the input port INP is formed (see FIG. 9A) or the optical fiber F may form a horizontal fiber coupling with the base substrate S on which the input port INP is formed (see FIG. 9B). For example, in the vertical fiber coupling (see FIG. 9A), the optical fiber F may be placed in a downwardly inclined position toward the base substrate S, and in the horizontal fiber coupling (see FIG. 9B), the optical fiber F may be placed in a position parallel to the base substrate S, and an inclined surface FS may be formed at the end of the optical fiber F to induce downward total reflection toward the base substrate S. Referring to FIG. 11, in an embodiment of the disclosure, the input port INP forming the grating coupling with the optical fiber F or the grating coupler of the input port INP may implement an optical coupling between a core having a diameter of approximately 10.4 µm and the optical waveguide W having a cross section of 0.45 µm x 0.22 µm, and may implement coupling of a relatively small optical loss while focusing an optical signal propagating along the core of the optical fiber F having a relatively large cross-sectional area into the optical waveguide W having a relatively small cross-sectional area. For example, the optical fiber F is a single mode optical fiber F for transmitting optical signals in the wavelength band of 1550 nm, and the diameter including the core and a cladding CL surrounding the core may be formed to be approximately 125 µm, and the diameter of the core where the propagation of optical signals is concentrated may be approximately 10.4 µm.

Referring to FIGS. 10 and 12, in an embodiment of the disclosure, the structure of the optical waveguide W forming the optical waveguide network WN may have a structure in which a bottom oxide (BOX) (e.g., SiO₂) is formed on a silicon substrate as a base substrate S, and a core (e.g., Si) of the optical waveguide W and a cladding CL (e.g., SiO₂) surrounding the core (e.g., Si) are formed thereon, and the propagation of an optical signal may be concentrated on the core (e.g., Si) of the optical waveguide W depending on the difference in refractive index between the core (e.g., Si) of the optical waveguide W and the cladding CL (e.g., SiO₂) surrounding the core (e.g., Si). For example, in an embodiment of the disclosure, an input port INP or a grating coupler of the input port INP that provides coupling of an optical signal between an optical fiber F and an optical waveguide W may be formed to have a cross-section of approximately 12 µm x 20 µm, and may be formed to be larger than the cross-section (of 10.4 µm in diameter) of the core of the optical fiber F (see FIG. 11).

Referring to FIGS. 1 and 4, in an embodiment of the disclosure, the input port INP and the output port OUTP may be arranged in plural along the first and second side portions S1 and S2 of the base substrate (e.g., the silicon substrate), and for example, each optical fiber F may form a one-to-one grating coupling in correspondence to each input portion INP to correspond to an array of the input ports INP arranged in plural along the first side portion S1 of the base substrate S. For example, the optical signal transmitted through each optical fiber F may be transmitted through an input port INP that forms a grating coupling with each optical fiber F and each optical waveguide W connected to each input port INP.

Referring to FIGS. 1 and 4, in an embodiment of the disclosure, the optical waveguide network WN may establish a connection between N input ports INP and N output ports OUTP according to mapping set between N input ports INP and N output ports OUTP. To this end, a photonic circuit according to an embodiment of the disclosure may include a coupler switch CS for controlling optical coupling efficiency between adjacent optical waveguides W forming the optical waveguide network WN to implement a flow of different optical power or a transmission of different optical power between these adjacent optical waveguides W.

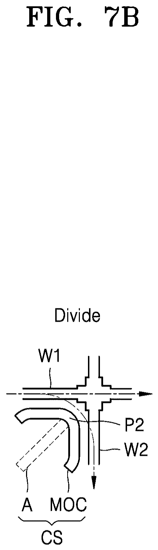

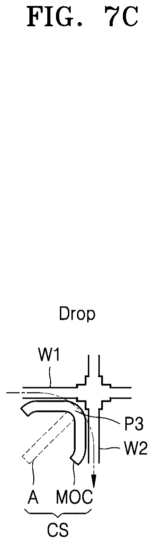

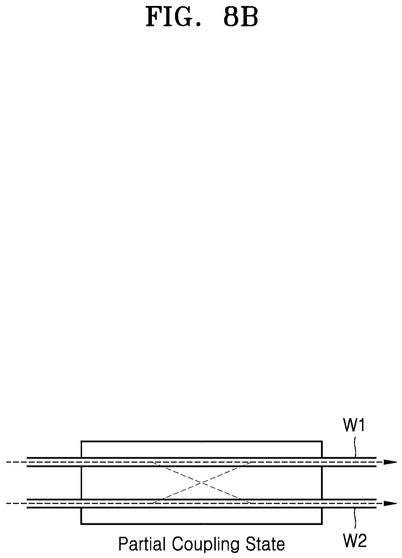

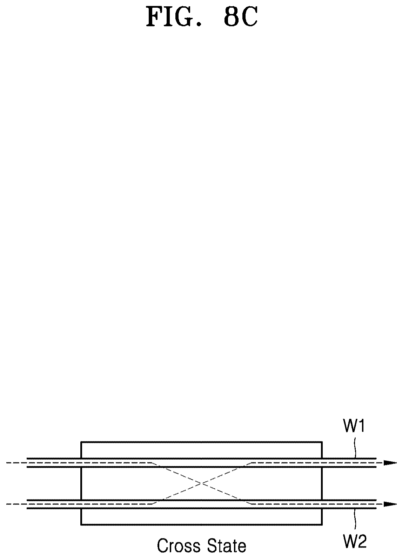

In an embodiment of the disclosure, the coupler switch CS may implement different flows of optical power or transmission of different optical power between the first and second optical waveguides W1 and W2 in which the flow of optical power crossing through the coupler switch CS is controlled by receiving an electrical control signal (first and second coupler control bits b1 and b2 described later) as an input, and in an embodiment of the disclosure, the transmission of different optical power or flow of different optical power implemented between the first and second optical waveguides W1 and W2 forming the optical waveguide network WN may be expressed in three different states as follows:
i) a through (see FIG. 7A) or bar state (see FIG. 8A) without transmission of the optical power that substantially crosses between the first and second optical waveguides W1 and W2;
ii) a splitting (dividing) (see FIG. 7B) or a partial coupling state (see FIG. 8B) corresponding to some remaining and some crossing of the optical power between the first and second optical waveguides W1 and W2; and
a drop (see FIG. 7C) or a cross state (see FIG. 8C) corresponding to the full crossing of the optical power between the first and second optical waveguides W1 and W2.

In an embodiment of the disclosure, the transmission or flow of the optical power crossing between different optical waveguides W may be defined as three states i), ii), and iii) as described above,

The state i) such as the through (see FIG. 7A) or bar (see FIG. 8A) state, which has no transmission of the optical power substantially crossing between the first and second optical waveguides W1 and W2, may mean a state in which optical coupling efficiency, in which transmission of optical power is substantially not performed between first and second optical waveguides W1 and W2 adjacent to each other, is lowest (for example, a state in which optical coupling efficiency is substantially close to zero) or a state in which optical coupling is substantially not performed between the first and second optical waveguides W1 and W2. For example, the state i) may mean a state in which the optical signal transmitted to the first optical waveguide W1 is not transmitted to the second optical waveguide W2 or even if the optical signal is transmitted to the second optical waveguide W2, the optical signal is transmitted with negligible optical power, and the optical signal transmitted to the first optical waveguide W1 is transmitted as it is through the first optical waveguide W1.

The state ii) such as the split (see FIG. 7B) or partial coupling (see FIG. 8B) state corresponding to some remaining and some crossing of the optical power between the first and second optical waveguides W1 and W2 is a state of the optical coupling efficiency of a middle class in which optical power is partially transmitted between the first and second optical waveguides W1 and W2 adjacent to each other. For example, the state ii) may mean a state in which, between the first optical waveguide W1 through which an optical signal is transmitted and the second optical waveguide W2 adjacent to the first optical waveguide W1, a portion of the optical signal transmitted to the first optical waveguide W1 is transmitted to the second optical waveguide W2, while the remaining portion of the optical signal transmitted to the first optical waveguide W1 continues to be transmitted as it is through the first optical waveguide W1. In addition, the state iii) such as the drop (see FIG. 7C) or cross (see FIG. 8C) state corresponding to the full crossing of the optical power between the first and second optical waveguides W1 and W2 is a state in which the optical coupling efficiency is at the maximum (e.g., the optical coupling efficiency is close to 100 %). For example, the state iii) may mean a state in which the optical signal input to the first optical waveguide W1 at an input side is output through the second optical waveguide W2 at an output side, and the optical signal transmitted to the first optical waveguide W1 is transmitted to the second optical waveguide W2 with total optical power. In an embodiment of the disclosure, the transmission or optical coupling efficiency of the optical power crossing between the first and second optical waveguides W1 and W2 adjacent to each other may be understood in terms of the transmission length or coupling length related to the optical coupling efficiency. For example, all of the optical signals or optical power of the first optical waveguide W1 may be transmitted to the second optical waveguide W2 through a transmission length or coupling length of an inverse relationship with the optical coupling efficiency between the first and second optical waveguides W1 and W2 adjacent to each other. As will be described later, a coupler switch CS may be formed on at least one of the first and second optical waveguides W1 and W2 to set a voltage for inducing a phase difference or phase mismatch between the first and second optical waveguides W1 and W2 by applying an external electric field to the at least one of the first and second optical waveguides W1 and W2. For example, when a voltage for inducing a phase difference or phase mismatch between the first and second optical waveguides W1 and W2 is not set from the coupler switch CS, for example, when a zero voltage is set from the coupler switch CS, all of the optical power may be transmitted between the first and second optical waveguides W1 and W2 through the transmission length or coupling length. In a state in which a voltage for inducing a phase difference or phase mismatch between the first and second optical waveguides W1 and W2 is set from the coupler switch CS, all of the optical power is not transmitted between the first and second optical waveguides W1 and W2. The optical power crossing between the first and second optical waveguides W1 and W2 (e.g., the transmission ratio of the optical power crossing between the first and second optical waveguides W1 and W2) may be expressed as a function of a phase difference or phase mismatch between the first and second optical waveguides W1 and W2.

FIGS. 3A to 3C are diagrams for explaining the ratio of optical power Out1 and Out2 (see FIG. 2) crossing between first and second optical waveguides W1 and W2 according to the magnitude of the voltage set by a coupler switch CS or a phase difference Δφ or phase mismatch Δφ caused between the first and second optical waveguides W1 and W2 from the set voltage, which show respectively different diagrams for explaining the ratio of optical power crossing between first and second optical waveguides W1 and W2 according to the magnitude of the voltage set by the coupler switch CS or a phase difference Δφ or phase mismatch Δφ caused between the first and second optical waveguides W1 and W2 from the magnitude of the set voltage. Referring to FIGS. 3A to 3C, it may be seen that the ratio of the optical power (outputs Out1 and Out2) (see FIG. 2) of the first and second optical waveguides W1 and W2 changes as the phase difference (Δφ) or phase mismatch (Δφ) between the first and second optical waveguides W1 and W2 increases as the voltage set from the coupler switch increases, and it may be seen that the ratio (a relative ratio of Out1 and Out2) (see FIG. 2) of the optical power crossing the first and second optical waveguides W1 and W2 decreases as the voltage set from the coupler switch CS increases, and the phase difference (Δφ) or phase mismatch (Δφ) between the first and second optical waveguides W1 and W2 increases.

Referring to FIGS. 1 and 4, the photonic circuit of the disclosure may include first and second aspects of embodiments that are different from each other, depending on a configuration of an optical waveguide network WN that connects between a plurality of input ports INP and a plurality of output ports OUTP and a coupler switch CS that implements the transmission of different optical power (e.g., the ratio of optical power transmitted between the first and second optical waveguides W1 and W2 that are adjacent to each other) between the first and second optical waveguides W1 and W2 that form the optical waveguide network WN to implement the mapping set between the plurality of input ports INP and the plurality of output ports OUTP.

Referring to FIGS. 1 and 2, in the first aspect of embodiment of the disclosure, the plurality of input ports INP and the plurality of output ports OUTP may be formed on the first and second side portions S1 and S2 facing each other of the base substrate S on which the optical waveguide network WN is formed, and the plurality of input ports INP and the plurality of output ports OUTP may be arranged along the first and second side portions S1 and S2 facing each other of the base substrate S. In addition, the first and second optical waveguides W1 and W2 in which the transmission of optical power crossing each other is changed through the coupler switch CS to implement mapping between multiple input ports INP and multiple output ports OUTP while forming the optical waveguide network WN may include a coupling (or tunable coupler) section (CP) extending parallel to each other at a relatively short distance position and a phase shift section (PS) extending parallel to each other at a relatively long distance position. For example, in an embodiment of the disclosure, a plurality of optical waveguides WN forming the optical waveguide network WN may generally extend parallel to the output port OUTP formed on the second side portion S2 facing the first side portion S1 of the base substrate S from the input port INP formed on the first side portion S1 of the base substrate S, and a coupling (or tunable coupler) section CP extending parallel to each other at a relatively short distance position and a phase shift section PS extending parallel to each other at a relatively long distance position may be included between the adjacent optical waveguides W. However, in various embodiments of the disclosure, the coupling (or tunable coupler) section CP and the phase shifter section PS may not be distinguished from each other between the adjacent optical waveguides WN forming the optical waveguide network WN. For example, the coupling (or tunable coupler) section CP and the phase shifter section PS may not be distinguished into a coupling (or tunable coupler) section CP of a relatively short-distance position and a phase shifter section PS of a relatively long distance. For example, the coupling section CP where optical power cross according to the leaked electric field of the evanescent field between the adjacent optical waveguides W forming the optical waveguide network WN and the phase shifter section PS for inducing phase difference or phase mismatch between the adjacent optical waveguides W may be formed over substantially the same section. In this specification, for the convenience of understanding, neighboring optical waveguides (e.g., first and second optical waveguides W1 and W2) forming an optical waveguide network WN are described as including a coupling (or tunable coupler) section CP in which optical power cross each other according to a leakage electric field of an evanescent field at a relatively short distance position, and a phase shifter section PS for inducing a phase difference or phase mismatch between neighboring optical waveguides (first and second optical waveguides W1 and W2) at a relatively long distance position, however, the technical configuration of the disclosure may not be limited to what are described as examples.

In an embodiment of the disclosure, a coupler switch CS may be formed on at least one of the first and second optical waveguides W1 and W2 to set a voltage for inducing a phase difference or phase mismatch between the first and second optical waveguides W1 and W2 by applying an external electric field to the at least one of first and second optical waveguides W1 and W2. For example, in an embodiment of the disclosure, the coupler switch CS may apply an external electric field on any one W of the first and second optical waveguides W1 and W2 or apply external electric fields of opposite polarities to both sides of the first and second optical waveguides W1 and W2. In an embodiment of the disclosure, the optical signal traveling through the optical waveguide W may have a changed light speed due to the influence of an external electric field, and for example, a phase difference or phase mismatch between the first and second optical waveguides W1 and W2 adjacent to each other may occur according to a change in the wavelength of the optical signal or a change in the refractive index of the optical waveguide W.

As shown in FIGS. 3A to 3C, the transmission of optical power crossing between the first and second optical waveguides W1 and W2 (the transmission ratio of optical power crossing between the first and second optical waveguides W1 and W2) may vary according to the phase difference (ΔΦ) or phase mismatch (ΔΦ) between the first and second optical waveguides W1 and W2. For example, depending on the voltage set by the coupler switch CS to induce a phase difference (ΔΦ) or phase mismatch (ΔΦ) between the first and second optical waveguides W1 and W2, transmission of different optical power may be implemented in each state of: i) a through (see FIG. 7A) or bar state (see FIG. 8A) without substantial transmission of the optical power that crosses between the first and second optical waveguides W1 and W2; ii) a splitting (dividing) (see FIG. 7B) or a partial coupling state (see FIG. 8B) of some remaining and some crossing of the optical power between the first and second optical waveguides W1 and W2; and iii) a drop (see FIG. 7C) or a cross state (see FIG. 8C) corresponding to the full crossing of the optical power between the first and second optical waveguides W1 and W2. For example, in an embodiment of the disclosure, the coupler switch CS, which receives electrical control signals to implement the transmission of different optical power between the first and second optical waveguides W1 and W2 adjacent to each other, may receive control signals including first and second coupler control bits b1 and b2 (see FIG. 1), to set three different levels of voltages to form three different states (bar, partial coupling, and cross states) (see FIGS. 8A to 8C) or three different states. For example, in an embodiment of the disclosure, a control unit (not shown) that outputs a control signal including first and second coupler control bits b1 and b2 for the coupler switch CS may be provided to implement mapping set between multiple input ports INP and multiple output ports OUTP, and the control unit (not shown) may generate and output a control signal toward each coupler switch CS that implements mapping for setting a connection between each input port INP and each output port OUTP according to a user's setting or the start of automatic setting in which a connection state is detected.

In an embodiment of the disclosure, three different states (bar, partial coupling, and cross states) (see FIGS. 8A to 8C) for transmission of optical power crossing between the first and second optical waveguides W1 and W2 may be set according to a voltage set from the coupler switch CS.
i) As a zero voltage is set from the coupler switch CS, the transmission of optical power in a drop or cross state corresponding to the full crossing of optical power may be implemented between the first and second optical waveguides W1 and W2 from the input port INP toward the output port OUTP (there is no phase difference or phase mismatch between the first and second optical waveguides W1 and W2).
ii) As a maximum voltage is set from the above coupler switch CS, the transmission of optical power in a through or bar state without a substantial cross of optical power may be implemented between the first and second optical waveguides W1 and W2 from the input port INP toward the output port OUTP (a phase difference or phase mismatch that may block all of the optical power crossing between the first and second optical waveguides W1 and W2).
iii) As a voltage between the zero voltage and the maximum voltage is set from the coupler switch CS, the transmission of optical power in a splitting (dividing) state or a partial coupling state corresponding to some remaining and some crossing of the optical power between the first and second optical waveguides W1 and W2 may be implemented between the first and second optical waveguides W1 and W2 from the input port INP toward the output port OUTP (a phase difference or phase mismatch that may block some of the optical power crossing between the first and second optical waveguides W1 and W2).

For example, in an embodiment of this disclosure, depending on the first and second coupler control bits b1 and b2 received by the coupler switch CS, or the first and second coupler control bits b1 and b2 output from the control unit toward the coupler switch CS,
i) in bit 0 of the first and second coupler control bits b1 and b2, phase matching is achieved between the first and second optical waveguides W1 and W2 from the input port INP toward the output port OUTP, and the transmission of optical power in a drop or cross state corresponding to full crossing of optical power may be implemented (there is no phase difference or phase mismatch between the first and second optical waveguides W1 and W2),
ii) in bit 1 of the first coupler control bit b1 and bit 0 of the second coupler control bit b2, phase mismatch that blocks partial transmission of optical power may be achieved between the first and second optical waveguides W1 and W2 from the input port INP toward the output port OUTP, and the transmission of optical power in the splitting (dividing) state or partial coupling state corresponding to some remaining and some crossing of the optical power may be implemented therebetween (phase difference or phase mismatch that may block some of the optical power crossing between the first and second optical waveguides W1 and W2, and
iii) in bit 1 of the first and second coupler control bits b1 and b2, the transmission of optical power in a through or bar state in which there is no substantial cross between the first and second optical waveguides W1 and W2 while forming a phase mismatch that blocks all transmission of optical power may be implemented between the first and second optical waveguides W1 and W2 from the input port INP toward the output port OUTP (phase difference or phase mismatch that may block all of the optical power crossing between the first and second optical waveguides W1 and W2).

Referring to FIGS. 4 to 7, in the second aspect of embodiment of the disclosure, the plurality of input ports INP and the plurality of output ports OUTP may be formed on the first and second side portions S1 and S2 to be in contact with each other at one corner of the base substrate S on which the optical waveguide network WN is formed, and the plurality of input ports INP and the plurality of output ports OUTP may be arranged along the first and second side portions S1 and S2 crossing each other of the base substrate S. In addition, regarding the first and second optical waveguides W1 and W2 in which the transmission of optical power crossing each other is changed through the coupler switch CS to implement mapping between multiple input ports INP and multiple output ports OUTP while forming the optical waveguide network WN, a coupler switch (CS) including a movable coupler MOC that implements an approach/retreat operation in an approach/retreat direction along an approaching direction toward the intersection point of the first optical waveguide W1 and the second optical waveguide W2 or a retreating direction away from the intersection point of the first optical waveguide W1 and the second optical waveguide W2 to control the transmission or optical coupling efficiency of optical power crossing between the first optical waveguide W1 connected to the input port INP and the second optical waveguide W2 connected to the output port OUTP may be formed adjacent to the intersection point of the first optical waveguide W1 connected to the input port INP and the second optical waveguide W2 connected to the output port OUTP.

In an embodiment of the disclosure, the movable coupler MOC is configured to set three different states regarding the transmission of optical power crossing between the first and second waveguides W1 and W2, at first to third positions P1, P2, and P3 at different distances from the intersection point between the first optical waveguide W1 connected to the input port INP and the second optical waveguide W2 connected to the output port OUTP, such as the first position P1 which is farthest from the intersection point of the first and second optical waveguides W1 and W2, the third position P3 which is closest from the intersection point of the first and second optical waveguides W1 and W2, and the second position P2 between the first and third positions P1 and P3 from the intersection point of the first and second optical waveguides W1 and W2.

More specifically, the movable coupler MOC may be configured to:
i) at a first position P1 farthest from the intersection point of the first and second optical waveguides W1 and W2, between the first waveguide W1 connected to the input port INP and the second waveguide W2 connected to the output port OUTP, implement the transmission of optical power of a through or bar state without a substantial cross of optical power;
ii) at a third position P3 closest to the intersection point of the first and second optical waveguides W1 and W2, between the first waveguide W1 connected to the input port INP and the second waveguide W2 connected to the output port OUTP, implement the transmission of optical power of a drop or cross state corresponding to full crossing of optical power; and
iii) at a second position P2 between the first position P1 farthest from the intersection point of the first and second optical waveguides W1 and W2 and the third position P3 closest to the intersection point, implement the transmission of optical power in a splitting (or dividing) or partial coupling state corresponding to some remain and some crossing of the optical power.

In an embodiment of the disclosure, the coupler switch CS may receive a control signal including first and second coupler control bits b1 and b2 for applying three different levels of control signals or control voltages, so that the movable coupler MOC may be positioned in three different levels according to the distance from the intersection point of the first and second optical waveguides W1 and W2 from the first position P1 which is the farthest from the intersection point of the first and second optical waveguides W1 and W2 to the third position P3 which is the closest therefrom. For example, in an embodiment of the disclosure, a control unit (not shown) for outputting a control signal including the first and second coupler control bits b1 and b2 to the coupler switch CS so as to implement mapping set between a plurality of input ports INP and a plurality of output ports OUTP may be provided, and the control unit (not shown) may generate and output the control signal including the first and second coupler control bits b1 and b2 to each coupler switch CS that implements mapping for setting a connection between each input port INP and each output port OUTP according to a user's setting or upon initiation of automatic setting that detects a connection state.

In an embodiment of the disclosure, according to the first to third positions P1, P2, and P3 set from the coupler switch CS, three different states (bar, partial coupling, and cross states) regarding the transmission of optical power crossing between the first and second optical waveguides W1 and W2 may be set. For example, according to a control signal including first and second coupler control bits b1 and b2 received by the coupler switch CS, or according to a control signal including first and second coupler control bits b1 and b2 output from a control unit (not shown) to the coupler switch CS, first to third positions P1, P2, and P3 of the movable coupler MOC set from the coupler switch CS may be set as follows:
i) in bit 0 of the first and second coupler control bits b1 and b2, the movable coupler MOC may be set to the first position P1 farthest from the intersection point of the first and second optical waveguides W1 and W2;
ii) in bit 1 of the first coupler control bit b1 and bit 0 of the second coupler control bit b2, the movable coupler MOC may be set to the second position P2 from the intersection point of the first and second optical waveguides W1 and W2; and
iii) in bit 1 of the first and second coupler control bits b1 and b2, the movable coupler MOC may be set to the first position P1 closest from the intersection point of the first and second optical waveguides W1 and W2.

In an embodiment of the disclosure, the movable coupler MOC may include a first coupling rib M1 extending parallel to the first optical waveguide W1 to form an evanescent coupling with the first optical waveguide W1 connected to the input port INP, and a second coupling rib M2 extending parallel to the second optical waveguide W2 to form an evanescent coupling with the second optical waveguide W2. For example, the movable coupler MOC may induce an evanescent coupling between the first optical waveguide W1 and the first coupling rib M1 extending parallel to each other as the movable coupler MOC approaches toward the intersection point of the first optical waveguide W1 connected to the input port INP and the second optical waveguide W2 connected to the output port OUTP (for example, as the movable coupler MOC approaches from the first position P1 of a bar state to the second position P2 of a partial coupling state or the third position P3 of a cross state). More specifically, it is possible to form a transmission or flow of optical power crossing the first coupling rib M1 of the movable coupler MOC from an electric field (evanescent field) leaking toward the first coupling rib M1 of the movable coupler MOC at an amplitude or intensity that decreases exponentially according to the distance from the surface of the first optical waveguide W1, and similarly, the movable coupler MOC may induce an evanescent coupling between the second optical waveguide W2 and the second coupling rib M2 extending parallel to each other as the movable coupler MOC approaches toward the intersection point of the first optical waveguide W1 connected to the input port INP and the second optical waveguide W2 connected to the output port OUTP (for example, as the movable coupler MOC approaches from the first position P1 of a bar state to the second position P2 of a partial coupling state or the third position P3 of a cross state). More specifically, it is possible to form a transmission or flow of optical power crossing the second optical waveguide W2 from an electric field (evanescent field) leaking toward the second optical waveguide W2 with an amplitude or intensity that decreases exponentially according to the distance from the surface of the second coupling rib M2. For example, in an embodiment of the disclosure, the movable coupler MOC may transmit the optical power of some or all of the optical signal of the first optical waveguide W1 from the first optical waveguide W1 to the first coupling rib M1 of the movable coupler MOC, while forming an evanescent coupling with the first optical waveguide W1 connected to the input port INP to which the optical signal is input, and the movable coupler MOC may transmit the optical power of some or all of the optical signal propagating along the second coupling rib M2 from the second coupling rib M2 to the second optical waveguide W2 connected to the output port OUTP, while forming an evanescent coupling with the second optical waveguide W2 connected to the output port OUTP through which the optical signal is output. As described above, in an embodiment of the disclosure, the transmission of optical power between the first and second optical waveguides W1 and W2 may include the transmission of optical power from the first optical waveguide W1 connected to the input port INP to which the input signal is input to the first coupling rib M1 of the movable coupler MOC through the evanescent coupling, and the transmission of optical power from the second coupling rib M2 of the movable coupler MOC to the second optical waveguide W2 through the evanescent coupling.

In an embodiment of the disclosure, an electric field (evanescent field) leaking between the first optical waveguide W1 and the movable coupler MOC forming the evanescent coupling may have, for example, an exponentially decreasing amplitude or intensity that decreases from the first optical waveguide W1 toward the movable coupler MOC (e.g. the first coupling rib M1 of the movable coupler MOC, and the electric field (evanescent field) leaking between the second optical waveguide W2 and the movable coupler MOC may have an amplitude or intensity that decreases, for example, exponentially decreases, from the movable coupler MOC toward the second optical waveguide W2. As described above, according to an embodiment of the disclosure, in implementing the transmission of optical power in three different states (bar, partial coupling, and cross states) between the first optical waveguide W1 connected to an input port INP and the second optical waveguide W2 connected to an output port OUTP, the position of the movable coupler MOC is set to different first to third positions P1, P2, and P3 according to the distance from the intersection point of the first and second optical waveguides W1 and W2 through the approach/retreat operation of the movable coupler MOC forming an evanescent coupling between the first optical waveguide W1 connected to the input port INP and the second optical waveguide W2 connected to the output port OUTP, and thus, as the intensity of the electric field leaking between the first and second optical waveguides W1 and W2 and the movable coupler MOC decreases, for example, according to the intensity of the leaking electric field that exponentially decreases depending on the distance from the first and second optical waveguides W1 and W2, the transmission of optical power crossing between the first and second optical waveguides W1 and W2 and the movable coupler MOC (that is, the transmission efficiency of the optical power between the first and second optical waveguides W1 and W2 and the movable coupler MOC) may be differentially set.

FIGS. 15 and 16 are different diagrams for explaining four main channels (Channel 0, 1, 2, Clock Channel, Lane 0, 1, 2, 3) of a high speed transmission rate set between a display source and a display sink and two auxiliary channels (SDA, SCL, AUX Channel) of a low speed transmission rate, respectively, in transmission of an HDMI and transmission of a display port.

In an embodiment of the disclosure, which includes a first aspect of embodiment (see FIG. 1) and a second aspect of embodiment (see FIG. 4) in the disclosure, through the optical waveguide network WN connecting between the plurality of input ports INP and the plurality of output ports OUTP, and the coupler switch CS for implementing the transmission of optical power in three different states (bar, partial coupling, and cross states) between adjacent first and second optical waveguides W1 and W2 forming the optical waveguide network WN to implement the mapping set between the plurality of input ports INP and the plurality of output ports OUTP, image signals and auxiliary signals transmitted through the plurality of input ports INP may be output to a display source connected to the plurality of output ports OUTP, and a sequence of image frames related to the image signals may be reproduced through the display source. For example, in an embodiment of the disclosure, at least one display source may be connected to the input port INP, and at least one display sink may be connected to the output port OUTP. In the disclosure, the fact that at least one display source is connected to the input port INP may mean that the display source is connected to the transmitting end side forming the opposite side of the optical fiber F that is connected to the input port INP, for example, that forms a grating coupling with the input port INP, and for example, may not necessarily mean that the display source is directly connected to the input port INP. Similarly, the fact that at least one display sink is connected to the output port OUTP may not necessarily mean that the display sink is directly connected to the output port OUTP, but may comprehensively mean that the display sink is connected to the output port OUTP via a transmission line, such as an optical fiber F or a conductive line, connected to the output port OUTP. In addition, through this disclosure, the connection of a display source to the input port INP or the connection of a display sink to the output port OUTP may comprehensively mean that at least one display source is connected to at least one input port INP or at least one display sink is connected to at least one output port OUTP.

In an embodiment of the disclosure, a one-to-one or one-to-many connection may be formed between a display source that generates and transmits an image signal and a display source that receives the image signal from the corresponding display source and reproduces a sequence of image frames related to the received image signal, and For example, even if a one-to-one connection is formed between the display sources and the display sinks, multiple communication channels may be formed between the display sources and the display sinks, and multiple communication channels may be formed to transmit different data. For example, in an embodiment of the disclosure, the communication channel formed between the display source and the display sink may include a main channel (or main link) transmitted at a relatively high transmission rate to transmit an image signal, and an auxiliary channel transmitted at a relatively low transmission rate to transmit an auxiliary signal for setting the main channel (or main link) between the display source and the display sink. For example, referring to FIG. 15, in high-definition multimedia interface (HDMI) transmission, the main channel may include a total of four main channels including three channels (channels 0, 1, and 2) for transmitting image data such as R, G, and B or Y, Cb, and Cr, and one main channel (cock channel) for a pixel clock, and the auxiliary channel may include a total of two auxiliary channels including a clock line SCL and a data line SDA for synchronization between the display source and the display sink. For example, referring to FIG. 16, in the transmission of the display port, the main channel may include four main channels (lanes 0, 1, 2, and 3) for transmitting an image signal and two auxiliary channels (AUX channels) for supporting bidirectional communication, including an auxiliary channel from the display source to the display sink and an auxiliary channel from the display sink to the display source. As described above, in an embodiment of the disclosure, a total of six communication channels for different data communication (four main channels for image signal transmission and two auxiliary channels for auxiliary signal transmission) may be set between the display source and the display sink, and these six different communication channels may be transmitted through fewer optical waveguides W, for example, two optical waveguides W, rather than six optical waveguides W with wavelength division multiplexing. That is, in an embodiment of the disclosure, each of the optical waveguides WN forming the optical waveguide network connecting between the input port INP and the output port OUTP may provide a plurality of communication channels.

FIG. 17 is a diagram for explaining that optical signals of different wavelength bands are allocated to five channels allocated to an optical waveguide W in an embodiment of the disclosure.

FIG. 18 is a diagram, in an embodiment of the disclosure, for explaining that optical signals of different wavelength bands are allocated to three channels allocated to an optical waveguide W, that is, two channels of high speed transmission rate and one channel of low speed transmission rate, according to respective transmission rates.

In an embodiment of the disclosure, the optical waveguide W forming the optical waveguide network WN connecting between the input port INP and the output port OUTP may have a profile of an optical gain or an optical loss having a full-width at half maximum (FWHM) (-3 dB) attenuated by half of the peak value of the center wavelength band λ0 toward both sides from the center wavelength band λ0 forming a single peak according to the specific structure and scale forming the optical waveguide W, and the optical waveguide W may transmit different optical signals together in wavelength bands spaced apart from each other with a wavelength separation band B therebetween considering a resolution for separation between different wavelength bands forming different communication channels to prevent cross-talk with each other between the different communication channels within a wavelength range forming the FWHM. Through this disclosure, the center wavelength band λ0 may mean a wavelength band forming a single peak in a profile of an optical gain or optical loss according to the specific structure and scale of the optical waveguide W, and in an embodiment of the disclosure, the attenuation of the optical signal transmitted to the optical waveguide W may be suppressed by allocating the wavelength band of the optical signal transmitted to the optical waveguide W within a wavelength range that forms a full-width at half maximum (FWHM) (-3 dB) attenuated by half of the peak value of the center wavelength band λ0 toward both sides from the center wavelength band λ0 forming a single peak (the attenuation of the amplitude or intensity of the optical signal is suppressed from being equal to or less than half of the peak value of the center wavelength band λ0).

In an embodiment of the disclosure, different communication channels of different wavelength bands transmitted through the same optical waveguide W through wavelength division multiplexing may be separated into different communication channels by applying a wavelength selection filter. In this case, the resolution for separation between different wavelength bands that form different communication channels to prevent cross-talk between the different communication channels may correspond to the resolution of the wavelength selection filter or a sum of the resolution of the wavelength selection filter and the marginal tolerance to separate optical signals of different wavelength bands transmitted from the same optical waveguide W. For example, in an embodiment of the disclosure, a wavelength selection filter for separating optical signals of different wavelength bands forming different communication channels may have a resolution of 5 nm, and in an embodiment of the disclosure, different communication channels transmitted to the same optical waveguide W may be formed as optical signals of different wavelength bands separated from each other with a 10 nm wavelength separation band B therebetween, which is obtained by summing marginal tolerances to the resolution (e.g., 5 nm) of the wavelength selection filter within a wavelength range of a full-width at half maximum (FWHM) of the optical gain or optical loss of the optical waveguide W. For example, in an embodiment of the disclosure, different communication channels transmitted to the same optical waveguide W may include five different optical signals in different wavelength bands spaced apart from each other with a wavelength separation band B of 10 nm therebetween within a wavelength range of 50 nm corresponding to a full-width at half maximum (FWHM) regarding the optical gain or the optical loss of the optical waveguide W (see FIG. 17). For example, a communication channel of a center wavelength band λ0, two communication channels with a wavelength separation band B of 10 nm therebetween on one side of the center wavelength band λ0, and two communication channels with the wavelength separation band B of 10 nm therebetween on the other side of the center wavelength band λ0 are allocated, and thus, a total of five communication channels or five different wavelength band optical signals may be transmitted through the same optical waveguide W (see FIG. 17).

In an embodiment of the disclosure, different optical signals (different communication channels) transmitted together through the same optical waveguide W may include optical signals of different transmission rates. For example, in an embodiment of the disclosure, a main channel (image signal) transmitted at a relatively high transmission rate and an auxiliary channel (auxiliary signal) transmitted at a relatively low transmission rate may be combined with each other and transmitted through the same optical waveguide W. According to an embodiment of the disclosure, when a main channel (image signal) transmitted at a relatively high transmission rate is compared with an auxiliary channel (auxiliary signal) transmitted at a relatively low transmission rate, it is relatively vulnerable to sensitivity issues that are difficult to sense at a receiving side, since a peak of a signal is attenuated and a signal width spreads widely, due to distortion of a transmission signal, inter-symbolic interference (ISI), delay dispersion, and impedance mismatch. Accordingly, the main channel (image signal) transmitted at a relatively high transmission rate may include an optical signal in the wavelength band adjacent to the center wavelength band λ0 with relatively less signal attenuation within the full-width at half maximum (FWHM) of the optical gain or optical loss of the optical waveguide W (allocating a wavelength band with a low attenuation rate, which is relatively adjacent to the center wavelength band λ0 for the main channel at high transmission rate), and the auxiliary channel (auxiliary signal) transmitted at a relatively low transmission rate may include an optical signal of a wavelength band relatively far away from a center wavelength band λ0 having a relatively severe signal attenuation (allocating a wavelength band having a high attenuation rate, which is relatively spaced apart far from the center wavelength band λ0 with respect to an auxiliary channel of a low transmission rate).

In an embodiment of the disclosure, six communication channels (four main channels (image signals) of high transmission rate and two auxiliary channels (auxiliary signals) of low transmission rate) set between a display source and a display sink, may be transmitted through at least two optical waveguides W in order to allocate optical signals of different wavelength bands spaced apart from each other with a wavelength separation band B therebetween within a wavelength range of a full-width at half maximum (FWHM) with respect to an optical gain or an optical loss of the optical waveguide W. For example, when six different communication channels are transmitted through one optical waveguide W, cross-talk may occur between these different communication channels. Accordingly, in an embodiment of the disclosure, the six communication channels set between the display source and the display sink may be distributed and transmitted through two different optical waveguides W, and by combining communication channels at respectively different transmission rates, for example, it is possible to avoid problems in high speed transmission (problems of high speed serial links) that make it difficult for the receiving side to detect (recognize) signals as the peak of the signal is attenuated and the width of the signal spreads widely. For example, the six communication channels (four main channels with a high transmission rate and two auxiliary channels with a low transmission rate) set between the display source and the display sink are divided into two divisions each including three communication channels including two main channels (image signals) transmitted at an equally high transmission rate and one auxiliary channel (auxiliary signal) transmitted at a low transmission rate, and the divided three communication channels may be assigned to respective different waveguides W, and a total of 6 communication channels may be set between the display source and the display sink through two different optical waveguides W, each of which is assigned to three communication channels. Referring to FIG. 18, in an embodiment of the disclosure, three communication channels allocated to each optical waveguide W are within the wavelength range of the full width at half maximum (FWHM) of the optical gain or light loss of the optical waveguide W (suppressing attenuation to equal to or less than half of the peak value of the center wavelength band λ0 that forms a single peak in the profile of the optical gain or light loss, e.g., -3dB), and may be formed in different wavelength bands spaced apart from each other with sufficient wavelength separation bands B therebetween. For example, a first high speed channel and a second high speed channel transmitted at a high transmission rate may be allocated in a wavelength band adjacent to the center wavelength band λ0, which is relatively less attenuated, and a low speed channel transmitted at a relatively low transmission rate may be allocated in a wavelength band spaced far away from the center wavelength band λ0, which is relatively highly attenuated. As described above, in an embodiment of the disclosure, the first and second high speed channels transmitted at high transmission rates are allocated to the wavelength bands adjacent to the center wavelength band λ0 to avoid difficulty in detecting or recognizing signals on high speed channels (high speed serial link) (solving difficulty in detecting or recognizing signals due to attenuation and dispersion of signals in high speed channels). In order to reduce attenuation for low speed channels that are predicted to have relatively high attenuation because wavelength bands that are relatively far from the center wavelength λ0 are assigned to the low speed channels, for example, in order to allocate a wavelength band as close as possible to the center wavelength band λ0 with a sufficient wavelength separation band B therebetween to suppress cross-talk with the first and second high speed channels, while wavelength bands at asymmetrical positions are allocated to both sides of the left and right-half regions based on the center wavelength band λ0 for the first and second high speed channels, the wavelength band of the right-half region is allocated to the second high speed channel, which is relatively skewed to the center wavelength band λ0, for the low speed channels. Accordingly, for example, a wavelength band adjacent to the center wavelength band λ0 may be allocated to the second high speed channel while having a sufficient wavelength separation band B therebetween to suppress cross-talk with the second high speed channel, and thus a relatively adjacent wavelength band from the center wavelength band λ0 may be allocated to the low speed channels allocated with a wavelength separation band B therebetween from the second high speed channel. In various embodiments of the disclosure, for the first and second high speed channels, in the left-half and right-half regions based on the center wavelength band λ0, a wavelength band relatively skewed toward the center wavelength band λ0 may be allocated in one region (e.g., a right-half region), and a wavelength band relatively skewed toward a side opposite to the center wavelength band λ0 may be allocated in the other region (a left-half region), and a wavelength band of a low speed channel may be allocated in a region (a right-half region) to which a wavelength band skewed toward the center wavelength band λ0 is allocated in the left-half region and the right-half region to which different wavelength bands are allocated for the first and second high speed channels, respectively.

As described above, in an embodiment of the disclosure, the six communication channels set between the display source and the display sink may be evenly allocated to two different optical waveguides W, and three communication channels may be allocated to each optical waveguide W. More specifically, for two main channels (image signals) of high speed transmission rates allocated to each optical waveguide W, two wavelength bands with less attenuation may be allocated relatively adjacent to the center wavelength band λ0, which forms a single peak in the profile of the light gain or light loss. For one auxiliary channel (auxiliary signal) of a low speed transmission rate allocated to each optical waveguide W, one wavelength band with severe attenuation relatively far from the center wavelength band λ0 may be allocated, and a wavelength band of either a left-half or a right-half region to which a wavelength band is allocated relatively close to the center wavelength band λ0 may be allocated.

FIG. 13 is a diagram for explaining a stack structure, according to a first aspect of the disclosure, in which a pair of a 1-1 optical waveguide W1-1 and a 1-2 optical waveguide W1-2 forming a first optical waveguide W1 connected to the same display source and a pair of a 2-1 optical waveguide W2-1 and a 2-2 optical waveguide W2-2 forming a second optical waveguide W2 connected to the same display sink are vertically arranged with each other, which shows a diagram for explaining a coupler switch CS configured or interlocked together to set the same state (bar, partial coupling, cross state) for the transmission of optical power crossing between the 1-1 optical waveguide W1-1 and the 2-1 optical waveguide W2-1 and between the 1-2 optical waveguide W1-2 and the 2-2 optical waveguide W2-2.

FIG. 14 is a diagram for explaining an interleave structure, according to a second aspect of the disclosure, in which a pair of a 1-1 optical waveguide W1-1 and a 1-2 optical waveguide W1-2 forming a first optical waveguide W1 connected to the same display source and a pair of a 2-1 optical waveguide W2-1 and a 2-2 optical waveguide W2-2 forming a second optical waveguide W2 connected to the same display sink are horizontally arranged with each other, which shows a diagram for explaining coupler switches CSa. CSb, and CSc configured or interlocked together to set the same state (bar, partial coupling, cross state) for the transmission of optical power crossing between the 1-1 optical waveguide W1-1 and the 2-1 optical waveguide W2-1 and between the 1-2 optical waveguide W1-2 and the 2-2 optical waveguide W2-2.

In an embodiment of the disclosure, which covers the first aspect of embodiment (see FIG. 13) and the second aspect of embodiment (see FIG. 14), a connection state such as one-to-one or many-to-many between multiple display sources and multiple display sinks may be set in the optical waveguide network WN, which connects between multiple input ports INP and multiple output ports OUTP. For example, considering only one-to-one connection between the same display source and the same display sink, six communication channels set between the same display source and the same display sink may include two different optical waveguides W. For example, six communication channels set between the same display source and the same display sink may be set through two different optical waveguides W connecting between two input ports INP connected to the same display source and two output ports OUTP connected to the same display sink.

In an embodiment of the disclosure, in order to implement mapping set between a plurality of input ports INP and a plurality of output ports OUTP, the first optical waveguide W1 may include a pair of a 1-1 optical waveguide W1-1 and a 1-2 optical waveguide W1-2, the second optical waveguide W2 may include a pair of a 2-1 optical waveguide W2-1 and a 2-2 optical waveguide W2-2, in the first and second optical waveguides W1 and W2 implementing the transmission of optical power in three different states (bar, partial coupling, and cross states) from a coupler switch CS. For example, the pair of the 1-1 optical waveguide W1-1 and the 1-2 optical waveguide W1-2 forming the first optical waveguide W1 may form six communication channels set between the same display source and the same display sink, and similarly, the pair of the 2-1 optical waveguide W2-1 and the 2-2 optical waveguide W2-2 forming the second optical waveguide W2 may form six communication channels set between the same display source and the same display sink. In addition, in an embodiment of the disclosure, the flow of optical power crossing between the 1-1 optical waveguide W1-1 and the 2-1 optical waveguide W2-1 and the flow of optical power crossing between the 1-2 optical waveguide W1-2 and the 2-2 optical waveguide W2-2 may be controlled together from the same coupler switch CS. For example, a connection state between the 1-1 optical waveguide W1-1 and the 2-1 optical waveguide W2-1 and a connection state between the 2-1 optical waveguide W2-1 and the 2-2 optical waveguide W2-2 may be set in the same connection state from the same coupler switch CS. For example, in an embodiment of the disclosure, when the same display source to which the pair of the 1-1 optical waveguide W1-1 and the 1-2 optical waveguide W1-2 forming the first optical waveguide W1 are connected and the same display sink to which the pair of the 2-1 optical waveguide W2-1 and the 2-2 optical waveguide W2-2 forming the second optical waveguide W2 are mapped to each other as a target to be connected, the same state of the partial coupling state or cross state from the same coupler switch CS, rather than the bar state, may be connected between the 1-1 optical waveguide W1-1 and the 2-1 optical waveguide W2-1 and between the 2-1 optical waveguide W2-1 and the 2-2 optical waveguide W2-2. In contrast, when the same display source to which the pair of the 1-1 optical waveguide W1-1 and the 1-2 optical waveguide W1-2 forming the first optical waveguide W1 are connected and the same display sink to which the pair of the 2-1 optical waveguide W2-1 and the 2-2 optical waveguide W2-2 forming the second optical waveguide W2 are mapped to each other as a target not to be connected, the same state of the partial coupling state or cross state from the same coupler switch CS, may be not connected between the 1-1 optical waveguide W1-1 and the 2-1 optical waveguide W2-1 and between the 2-1 optical waveguide W2-1 and the 2-2 optical waveguide W2-2, like state of the bar state, rather than the partial coupling state or cross state. For example, referring to FIG. 14, in the pair of the 1-1 optical waveguide W1-1 and the 1-2 optical waveguide W1-2 of the first optical waveguide W1 connected to the same display source, and the pair of the 2-1 optical waveguide W2-1 and the 2-2 optical waveguide W2-2 of the second optical waveguide W2 connected to the same display sink, a coupler switch CSa configured or interlocked together may be provided to set the same state for the transmission of optical power crossing between the 1-1 optical waveguide W1-1 and the 2-1 optical waveguide W2-1 and between the 1-2 optical waveguide W1-2 and the 2-2 optical waveguide W2-2, and the remaining other coupler switches CSb and CSc may also be configured or interlinked together to set the same state relating to the transmission of optical power between different pairs of optical waveguides adjacent to each other.

As described above, in an embodiment of the disclosure, the first and second optical waveguides W1 and W2 are set to three different states (bar, partial coupling, and cross states), in the efficiency of the transmission or optical coupling of the optical power, and this may mean that the transmission and optical coupling efficiency of optical power are set in the same state as any one of three different states (bar, partial coupling, and cross states) from the same coupler switch CS between the 1-1 optical waveguide W1-1 forming the first optical waveguide W1 and the 2-1 optical waveguide W2-1 forming the second optical waveguide W2 and between the 1-2 optical waveguide W1-2 forming the first optical waveguide W1 and the 2-2 optical waveguide W2-2 forming the second optical waveguide W2.

In this case, a pair of a 1-1 optical waveguide W1-1 and a 1-2 optical waveguide W1-2 forming a first optical waveguide W1 connected to the same display source may be formed at positions adjacent to each other. For example, in an embodiment of the disclosure, a pair of the 1-1 optical waveguide W1-1 and the 1-2 optical waveguide W1-2 connected to the same display source may be formed in a stack shape vertically with respect to each other (see FIG. 13), or in an interleave shape horizontally with respect to each other (see FIG. 14), and may be formed adjacent to each other.

In the first aspect of embodiment of the disclosure (see FIG. 13), a pair of the 1-1 optical waveguide W1-1 and the 1-2 optical waveguide W1-2 connected to the same display source may be formed in a stack shape vertically with respect to each other, and a pair of a 2-1 optical waveguide W2-1 and a 2-2 optical waveguide W2-2 connected to the same display sink may be formed in a stack shape vertically with respect to each other. In addition, as a pair of the 1-1 optical waveguide W1-1 and the 1-2 optical waveguide W1-2 are formed in adjacent positions, and a pair of the 2-1 optical waveguide W2-1 and the 2-2 optical waveguide W2-2 are formed in adjacent positions, the transmission of optical power between the 1-1 optical waveguide W1-1 forming the first optical waveguide W1 and the 2-1 optical waveguide W2-1 forming the second optical waveguide W2 and between the 1-2 optical waveguide W1-2 forming the first optical waveguide W1 and the 2-2 optical waveguide W2-2 forming the second optical waveguide W2 may be set to the same state (any one of bar, partial coupling and cross states) from the same coupler switch CS. However, as described above, in the first aspect of embodiment (see FIG. 13), the pair of the 1-1 optical waveguide W1-1 and the (1-2 optical waveguide W1-2 connected to the same display source, and the pair of the 2-1 optical waveguide W2-1 and the 2-2 optical waveguide W2-2 connected to the same display sink may be formed in a stack shape vertically with respect to each other or may be formed in an interleave shape horizontally with respect to each other.

In the second aspect of embodiment of the disclosure (see FIG. 14), a pair of the 1-1 optical waveguide W1-1 and the 1-2 optical waveguide W1-2 connected to the same display source may be formed in an interleave shape horizontally with respect to each other, and a pair of a 2-1 optical waveguide W2-1 and a 2-2 optical waveguide W2-2 connected to the same display sink may be formed in an interleave shape horizontally with respect to each other. In addition, as a pair of the 1-1 optical waveguide W1-1 and the 1-2 optical waveguide W1-2 are formed in adjacent positions, and a pair of the 2-1 optical waveguide W2-1 and the 2-2 optical waveguide W2-2 are formed in adjacent positions, the transmission of optical power between the 1-1 optical waveguide W1-1 forming the first optical waveguide W1 and the 2-1 optical waveguide W2-1 forming the second optical waveguide W2 and between the 1-2 optical waveguide W1-2 forming the first optical waveguide W1 and the 2-2 optical waveguide W2-2 forming the second optical waveguide W2 may be set to the same state (any one of bar, partial coupling and cross states) from the same coupler switch CS. However, as described above, in the second aspect of embodiment (see FIG. 14), the pair of the 1-1 optical waveguide W1-1 and the (1-2 optical waveguide W1-2 connected to the same display source, and the pair of the 2-1 optical waveguide W2-1 and the 2-2 optical waveguide W2-2 connected to the same display sink may be formed in a stack shape vertically with respect to each other or may be formed in an interleave shape horizontally with respect to each other.

In an embodiment of the disclosure, six communication channels having the same display source as one end may be evenly allocated to a pair of the 1-1 optical waveguide W1-1 and the 1-2 optical waveguide W1-2 connected to the same display source, and a total of three communication channels including two main channels (image signals) at a high transmission rate and one auxiliary channel (auxiliary signal) at a low transmission rate may be allocated to each of the 1-1 optical waveguide W1-1 and the 1-2 optical waveguide W1-2. Similarly, six communication channels having the same display sink as one end may be evenly allocated to a pair of the 2-1 optical waveguide W2-1 and the 2-2 optical waveguide W2-2 connected to the same display sink, and a total of three communication channels including two main channels (image signals) at a high transmission rate and one auxiliary channel (auxiliary signal) at a low transmission rate may be allocated to each of the 2-1 optical waveguide W2-1 and the 2-2 optical waveguide W2-2.

In an embodiment of the disclosure, the same state (any one of bar, partial coupling, and cross states) from the same coupler switch CS may be set between the 1-1 optical waveguide W1-1 forming the first optical waveguide W1 and the 2-1 optical waveguide W2-1 forming the second optical waveguide W2 and between the 1-2 optical waveguide W1-2 forming the first optical waveguide W1 and the 2-2 optical waveguide W2-2 forming the second optical waveguide W2, and this means that, for example, the same state from a single coupler switch CS including physically identical objects may be set between the 1-1 optical waveguide W1-1 and the 1-2 optical waveguide W1-2 and between the 2-1 optical waveguide W2-1 and the 2-2 optical waveguide W2-2. In addition, even if the same state from the coupler switch CS including different physically separated objects are set between the 1-1 optical waveguide W1-1 and the 1-2 optical waveguide W1-2 and the 2-1 optical waveguide W2-1 and the 2-2 optical waveguide W2-2, this means that, for these physically separate different objects of the coupler switches CS, the coupler switches CS including different objects may be electrically connected to each other so as to receive the same control signal (control signal including the first and second coupler control bits b1 and b2).

In an embodiment of the disclosure, the optical waveguide network WN connecting multiple input ports INP and multiple output ports OUTP to each other may form four main channels for image signals and two auxiliary channels for auxiliary signals to mediate the transmission of image signals and auxiliary signals between the display sources connected to the input ports INP and the display sinks connected to the output ports OUTP. As described above, a total of six channels may be formed through two optical waveguides W, each with two main channels and one auxiliary channel, and different wavelength bands may be allocated to the main channel of high speed transmission rate and the auxiliary channel of low speed transmission rate allocated to each optical waveguide W in consideration of signal attenuation, as shown in FIG. 18.

In various embodiments of the disclosure, the optical waveguide network WN may provide six channels related to an image signal and an auxiliary signal, and Each optical waveguide W may be assigned a combination of channels of different transmission rates (a combination of channels at relatively high transmission rates and channels at relatively low transmission rates) in consideration of problems such as difficulties in detection of signals due to influences such as signal attenuation, for example, signal attenuation and distribution of channels (high speed serial link) at high transmission rates. For example, within the wavelength range of the FWHM in the profile of the optical gain or optical loss of the optical waveguide W, a wavelength band adjacent to the center wavelength band λ0 forming a single peak is assigned to a channel at a relatively high transmission rate, and a wavelength band relatively far from the center wavelength band λ0 forming a single peak is assigned to a channel at a relatively low transmission rate, to thereby transmit multiple communication channels through a single optical waveguide W while avoiding problems such as difficulty in signal detection due to signal attenuation or the like in high speed serial links, as well as while suppressing cross-talk between different wavelength bands through wavelength division multiplexing.

FIG. 19 is a diagram, in an embodiment of the disclosure, for explaining that optical signals of different wavelength bands are allocated to four channels allocated to an optical waveguide W, that is, two channels of high speed transmission rate and two channels of low speed transmission rate, according to respective transmission rates.

FIG. 20 is a diagram, in an embodiment of the disclosure, for explaining that optical signals of different wavelength bands are allocated to three channels allocated to an optical waveguide W, that is, one channel of high speed transmission rate and two channels of low speed transmission rate, according to respective transmission rates.

FIG. 21 shows a profile showing optical loss or attenuation according to the wavelength of an optical fiber F (that is, silica-based optical fiber).

As shown in FIG. 19, in an embodiment of forming four different communication channels through one optical waveguide W, two channels having a relatively high transmission rate and two channels having a low transmission rate may be combined together. In this case, the wavelength bands relatively close to a center wavelength band λ0 may be allocated for two channels of high transmission rates, in a left-half region and a right-half region around the center wavelength band λ0, and the wavelength bands may be allocated at symmetrical positions around the center wavelength band λ0, and for two channels of low transmission rates, the wavelength bands relatively far from the center wavelength band λ0 may be allocated in the left-half region and the right-half region around the center wavelength band λ0, and the wavelength bands may be allocated at symmetrical positions around the center wavelength band λ0.

As shown in FIG. 20, in an embodiment of forming three different communication channels through one optical waveguide W, the center wavelength band λ0 that forms a single peak may be allocated to one channel at a high transmission rate, and for two channels at a relatively low transmission rate, wavelength bands may be allocated at symmetrical positions in the left-half and right-half regions around the center wavelength band λ0 having a single peak. For example, in an embodiment (see FIGS. 17 and 20) in which three or five odd different communication channels are formed through one optical waveguide W, a center wavelength band λ0 with the least signal attenuation may be allocated to one channel at a high transmission rate.

In an embodiment of the disclosure, the center wavelength band λ0 forming a single peak in the profile of the optical gain or optical loss of the optical waveguide W may be set to a wavelength band forming a window having a relatively small optical loss, with reference to the profile (see FIG. 21) regarding the optical loss of the optical fiber F connected to the input port INP of the optical waveguide network WN formed by the optical waveguide W, for example, the wavelength band of 850 nm, 1310 nm 1550 nm, or the like. In an embodiment of the disclosure, the optical loss of the optical fiber F may be suppressed for the optical signals of the wavelength band selected with the wavelength separation band B therebetween within a wavelength range of about 50 nm for forming the FWHM from the center wavelength band λ0 set in the wavelength band forming the window with relatively small optical loss.

In an embodiment of the disclosure, in a profile regarding the optical gain or optical loss of the optical waveguide W, wavelength bands spaced apart from each other may be allocated to different communication channels with wavelength separation bands B therebetween within a wavelength range forming a full width at half maximum (FWHM). This may mean allocating different wavelength bands with a minimum wavelength separation band B (e.g., 10 nm) therebetween to suppress cross-talk between communication channels (optical signals) of different wavelength bands, and may mean that different wavelength bands are allocated with the minimum wavelength separation band B (e.g., 10 nm) therebetween capable of suppressing cross-talk with each other, rather than meaning that the wavelength separation band B arranged between different wavelength bands allocated for each different communication channel is constantly limited.

A photonic circuit according to another aspect of the disclosure includes:
an optical fiber F for transmitting an optical signal;
an optical waveguide network WN that forms a coupling (grating coupling) with the optical fiber F, and that connects between an input port INP forming a transmitting end side and an output port OUTP forming a receiving end side opposite to the transmitting end side; and
a coupler switch CS for controlling the transmission or optical coupling of optical power crossing between adjacent first and second optical waveguides W1 and W2 forming the optical waveguide network WN, the coupler switch for implementing transmission of different optical power by controlling coupling efficiency between the first and second optical waveguides W1 and W2 from an electrical input, the optical power having different states of a through or bar state in which there is substantially no crossing of optical power between the first and second optical waveguides W1 and W2, a splitting (dividing) or partial coupling state corresponding to some remaining and some crossing of optical power between the first and second optical waveguides W1 and W2, and a drop or cross state corresponding to full crossing of optical power between the first and second optical waveguides W1 and W2, wherein
the first optical waveguide W1 includes a pair of a 1-1 optical waveguide W1-1 and a 1-2 optical waveguide W1-2, the second optical waveguide W2 includes a pair of a 2-1 optical waveguide W2-1 and a 2-2 optical waveguide W2-2, and
at least one single optical waveguide W of the 1-1 optical waveguide W1-1, the 1-2 optical waveguide W1-2, the 2-1 optical waveguide W2-1, and the 2-2 optical waveguide W2-2 has a profile of an optical gain or optical loss with a full-width at half maximum (FWHM) attenuated by half of the peak value of the center wavelength band toward both sides from the center wavelength band λ0 forming a single peak.

In addition, the single optical waveguide W may transmit different optical signals together in wavelength bands spaced apart from each other with a wavelength separation band B therebetween considering a resolution for separation between different wavelength bands forming different communication channels to prevent cross-talk with each other within a wavelength range forming the FWHM.

For example, in an embodiment of the disclosure, the optical waveguide network WN may connect between a plurality of input ports INP and a plurality of output ports OUTP. In this case, each optical waveguide W forming the optical waveguide network WN, That is, each optical waveguide W (W corresponds to a single optical waveguide of the appended claims) of the 1-1 optical waveguide W1-1 and the optical waveguide W1-2 forming the first optical waveguide W1 and the 2-1 optical waveguide W2-1 and the 2-2 optical waveguide W2-2 forming the second optical waveguide W2, includes two high speed channels (image signal transmission) of the high transmission rate and one low speed channel (auxiliary signal transmission) of the low transmission rate, and each optical waveguide W may form three different communication channels. Referring to FIG. 13, the 1-1 optical waveguide W1-1 and the 1-2 optical waveguide W1-2, which form the first optical waveguide W1, may transmit two high speed channels of the relatively high transmission rate and one low speed channel of the relatively low transmission rate. Accordingly, both the 1-1 optical waveguide W1-1 and the 1-2 optical waveguide W2-1 may form a total of six communication channels including four high speed channels for an image signal and two low speed channels for an auxiliary signal between the same display source and the same display sink. In addition, referring to FIG. 13 (the first aspect), each of the 2-1 optical waveguide W2-1 and the 2-2 optical waveguide W2-2 may transmit two high speed channels of the relatively high transmission rate and one low speed channel of the relatively low transmission rate. Accordingly, both the 2-1 optical waveguide W2-1 and the 2-2 optical waveguide W2-2 may form a total of six communication channels including four high speed channels for another image signal and two low speed channels for another auxiliary signal between the other same display source and the other same display sink.

Referring to FIG. 14 (the second aspect), each of the 1-1 optical waveguide W1-1 and the 1-2 optical waveguide W1-2 may transmit two high speed channels of the relatively high transmission rate and one auxiliary channel of the relatively low transmission rate. Accordingly, both the 1-1 optical waveguide W1-1 and the 1-2 optical waveguide W1-2 may form a total of six communication channels including four high speed channels for an image signal and two low speed channels for an auxiliary signal from the same display source. In addition, referring to FIG. 14 (the second aspect), each of the 2-1 optical waveguide W2-1 and the 2-2 optical waveguide W2-2 may transmit two high speed channels of the relatively high transmission rate and one low speed channel of the relatively low transmission rate. Accordingly, both the 2-1 optical waveguide W2-1 and the 2-2 optical waveguide W2-2 may form a total of six communication channels including four high speed channels for an image signal and two low speed channels for an auxiliary signal toward the same display sink.

Referring to FIGS. 13 (first aspect) and 14 (second aspect), in an embodiment of the disclosure, the optical waveguide network may be a 2N×2N optical waveguide network that maps 2N input ports and 2N output ports to each other,
the input ports INP and the display source may form a 2:1 connection so that image signals and auxiliary signals output from N display sources are input to the 2N input ports INP,
the output ports OUTP and the display sink may form a 2:1 connection so that image signals and auxiliary signals are output toward the N display sinks in the 2N output ports OUTP, and
according to a control signal applied to the coupler switch CS to implement transmission of different optical power between the first and second optical waveguides W1 and W2 adjacent to each other forming the optical waveguide network WN between the input ports INP and the output ports OUTP, the optical waveguide network WN may route or distribute a pair of image signals and auxiliary signals input through the input port INP connected to the same display source toward the output port OUTP connected to the same display sink. To this end, the transmission of the optical power crossing between the 1-1 optical waveguide W1-1 and the 2-1 optical waveguide W2-1 and the transmission of the optical power crossing between the 1-2 optical waveguide W1-2 and the 2-2 optical waveguide W2-2 may be controlled together from the same coupler switch CS.

Referring to FIG. 13 (first aspect), the optical waveguide network WN may be an N×N optical waveguide network WN that maps N input ports INP and N output ports OUTP to each other. The 1-1 optical waveguide W1-1 and the 2-1 optical waveguide W2-1 may be the optical waveguides W extending adjacent to each other between two different input ports INP among the N input ports INP and two different output ports OUTP among the N output ports OUTP.

The 1-2 optical waveguide W1-2 and the 2-2 optical waveguide W2-2 may be the optical waveguides W extending adjacent to each other between two other different input ports INP among the N input ports INP and two other different output ports OUTP among the N output ports OUTP.

The flow of the optical power crossing between the 1-1 optical waveguide W1-1 and the 2-1 optical waveguide W2-1 and the flow of the optical power crossing between the 1-2 optical waveguide W1-2 and the 2-2 optical waveguide W2-2 are controlled together from the same coupler switch CS.

Referring to FIG. 13 (the first aspect), a pair of the 1-1 optical waveguide W1-1 and the 1-2 optical waveguide W1-2 may connect between the input port INP to which the same display source is connected and the output port OUTP to which the same display sink is connected, and similarly, a pair of the 2-1 optical waveguide W2-1 and the 2-2 optical waveguide W2-2 may connect between the input port INP to which the other same display source is connected and the output port OUTP to which the other same display sink is connected. For example, the 1-1 optical waveguide W1-1 and the 1-2 optical waveguide W1-2 may transmit an image signal including image data and an auxiliary signal including auxiliary data between the same display source and the same display sink, and the 2-1 optical waveguide W2-1 and the 2-2 optical waveguide W2-2 may transmit an image signal including other image data and an auxiliary signal including other auxiliary data between another same display source and another same display sink.

Referring to FIG. 14 (second aspect), the optical waveguide network WN may be an N×N optical waveguide network that maps N input ports INP and N output ports OUTP to each other, and
may include N 1-1 optical waveguides W1-1 and 1-2 optical waveguides W1-2 (that is, first optical waveguides W1) connected to the input port INP, and N 2-1 optical waveguides W2-1 and 2-2 optical waveguides W2-2 (that is, second optical waveguides W2) connected to the output port OUTP. That is, in an embodiment of the disclosure, the optical waveguide W connected to the input port INP may be defined as the first optical waveguide W1, and the optical waveguide W connected to the output port OUTP may be defined as the second optical waveguide W2. In this case, the flow of the optical power crossing between the 1-1 optical waveguide W1-1 and the 2-1 optical waveguide W2-1 and the flow of the optical power crossing between the 1-2 optical waveguide W1-2 and the 2-2 optical waveguide W2-2 may be controlled together from the same coupler switch CS.

Referring to FIG. 14 (second aspect), the pair of the 1-1 optical waveguide W1-1 and the 1-2 optical waveguide W1-2 and the pair of the 2-1 optical waveguide W2-1 and the 2-2 optical waveguide W2-2 may connect between the input port INP to which the same display source is connected and the output port OUTP to which the same display sink is connected. For example, the 1-1 optical waveguide W1-1 and the 1-2 optical waveguide W1-2 may transmit an image signal including image data and an auxiliary signal including auxiliary data from the same display source, and the 2-1 optical waveguide W2-1 and the 2-2 optical waveguide W2-2 may transmit an image signal including image data and an auxiliary signal including auxiliary data toward the same display sink.

FIG. 22 is a diagram for explaining an edge coupling between an optical fiber F through which an optical signal is transmitted and an input port INP (an edge coupler), which shows a diagram for explaining edge coupling different from the grating coupling or surface coupling shown in FIGS. 9A and 9B.

In an embodiment of the disclosure, the input port INP may include an edge coupler that forms an in-plane coupling with the optical fiber F. In various embodiments of the disclosure, the optical fiber F is arranged on the base substrate S on which the input port INP is formed according to the type of an optical coupler according to the arrangement between the input port INP and the optical fiber F. In this case, for example, the optical fiber F is placed at a level outside the base substrate S on which the input port INP is formed (in an out-of-plane coupling, surface coupling, or grating coupling state), and depending on the posture of the optical fiber F with respect to the base substrate S, the optical fiber F is arranged in a downward posture toward the base substrate S, and forms a vertical fiber coupling with the base substrate S on which the input port INP is formed (see FIG. 9A), or the optical fiber F is arranged in a posture parallel with the base substrate S to form a horizontal fiber coupling with the base substrate S on which the input port INP is formed (see FIG. 9B), or the optical fiber F may form an in-plane coupling while being arranged in a butt-coupled state to face a facet of the optical waveguide of the base substrate S, and an optical signal from the optical fiber F may be guided along the optical waveguide W (Si waveguide) of the base substrate S. For example, as shown in FIG. 11, when an optical waveguide F and an optical waveguide of a base substrate S are directly butt coupled in an edge coupling for implementing optical coupling between a core having a diameter of approximately 10.4 µm and an optical waveguide (W) having a cross-section of 0.45 µm × 0.22 µm, optical coupling loss of approximately 30 dB may be caused, and thus to increase the optical coupling efficiency between the optical fiber F and the optical waveguide W of the base substrate S, the core of the optical fiber F (a center area having a relatively large refractive index in an optical fiber F including a core including an center of the optical fiber F and a cladding surrounding the core) and the optical waveguide W (Si waveguide) of the base substrate S forming an optical coupling with the optical fiber F may be optically aligned with each other. A mode-matching structure, such as an inverted taper structure or an optical lens structure, may be introduced between the optical fiber F and the optical waveguide W of the base substrate S to reduce optical mismatch and achieve mode matching.

FIGS. 23 and 24 are diagrams for explaining USB communication and Thunderbolt communication as an embodiment of different communication protocols to which an optical waveguide network WN of the disclosure may be applied.

In the disclosure, a one-to-one or one-to-many connection between a display source and a display sink of an HDMI or a display port is described as an example type in which signal distribution or mapping is performed by an optical waveguide network WN connecting between a plurality of input ports INP and a plurality of output ports OUTP. However, the optical waveguide network WN according to an embodiment of the disclosure may be applied to various communication protocols such as USB and Thunderbolt as well as transmission of HDMI or display ports including image signals or image signals and auxiliary signals. For example, as shown in FIG. 23, the optical waveguide network WN may support a super (full) speed transmission lane (super speed TX1 +, TX1-, differential pair 1), a super (full) speed reception lane (super speed RX2+, RX2-, differential pair 2), a high speed transmission lane (high speed D +, D -, differential pair), and the like. For example, the optical waveguide network WN may support USB communication capable of transmitting multi-channel signals (e.g. including an alternative mode-DP Alt mode supported in USB-C type), or two transmission lanes and two reception lanes, generally three transmission lanes and one reception lane as shown in FIG. 24, and the technical features of the disclosure described above may be applied to the Thunderbolt communication capable of transmitting a multi-channel signal in substantially the same or similar manner.

According to the disclosure, in an optical waveguide network connecting between a plurality of input ports and a plurality of output ports, mapping set between a plurality of input ports and a plurality of output ports according to a control signal applied to the coupler switch is implemented to control transmission of optical power crossing between first and second optical waveguides adjacent to each other forming the optical waveguide network, and the transmission of optical power crossing between a pair of first optical waveguides and a pair of second optical waveguides connecting between the same display source and the same display sink is controlled together from the same coupler switch to provide a main channel of relatively high transmission rate for transmitting an image signal between a display source and a display sink, and an auxiliary channel of relatively low transmission rate for transmitting an auxiliary signal for setting the main channel. Accordingly, the disclosure may provide a photonic circuit that may reduce, by half, the number of coupler switches for forming different flows of optical power between the pair of first optical waveguides and the pair of second optical waveguides, and that may simplify the overall control structure, including a control unit and a control line for the generation of a control signal and the output of the generated control signal.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A photonic circuit comprising:
an optical fiber for transmitting an optical signal;
an optical waveguide network that forms a coupling with the optical fiber and connects between an input port forming a transmitting end side and an output port forming a receiving end side opposite to the transmitting end side; and
a coupler switch for controlling the transmission or optical coupling of optical power crossing between adjacent first and second optical waveguides forming the optical waveguide network, the coupler switch being for implementing transmission of different optical power by controlling coupling efficiency between the first and second optical waveguides from an electrical input, the optical power having different states of a through or bar state in which there is substantially no crossing of optical power between the first and second optical waveguides, a splitting (dividing) or partial coupling state corresponding to some remaining and some crossing of optical power between the first and second optical waveguides, and a drop or cross state corresponding to full crossing of optical power between the first and second optical waveguides, wherein
the first optical waveguide includes a pair of a 1-1 optical waveguide and a 1-2 optical waveguide, the second optical waveguide includes a pair of a 2-1 optical waveguide and a 2-2 optical waveguide, and
the transmission of the optical power crossing between the 1-1 optical waveguide and the 2-1 optical waveguide and the transmission of the optical power crossing between the 1-2 optical waveguide and the 2-2 optical waveguide are controlled together by the same coupler switch.

2. The photonic circuit of claim 1, wherein the input port includes a grating coupler that forms a grating coupling with the optical fiber, optionally wherein the grating coupler provides optical coupling from a core of a relatively wide optical fiber to a core of a relatively narrow optical waveguide, or wherein the optical fiber forms a vertical fiber coupling arranged in a downwardly inclined posture toward the grating coupler or forms a horizontal fiber coupling arranged parallel to the grating coupler, wherein an inclined surface for total internal reflection toward the grating coupler may be formed at an end of the optical fiber.

3. The photonic circuit of claim 1, wherein
the optical waveguide network connects between the input port and the output port, which are respectively formed in first and second side portions facing each other on a base substrate on which the optical waveguide network is formed, and
the first and second optical waveguides include a coupling section in which the first and second optical waveguides extend parallel to each other at a relatively short distance position, and a phase transition section in which the first and second optical waveguides extend parallel to each other at a relatively long distance position, while extending from the input port toward the output port, optionally wherein, in the phase transition section, the coupler switch is formed on at least one of the first and second optical waveguides to set a voltage that induces a phase difference or phase mismatch between the first and second optical waveguides by applying an external electric field to the at least one of the first and second optical waveguides, further optionally wherein the transmission or optical coupling efficiency of optical power crossing between the first and second optical waveguides in the coupling section differs according to the phase difference or phase mismatch between the first and second optical waveguides caused by the voltage set from the coupler switch in the phase shift section, or wherein the coupler switch receives first and second coupler control bits for applying three different levels of voltages to cause different degrees of phase difference or phase mismatch between the first and second optical waveguides to implement transmission of different optical power, the optical power having different states of through without crossing, some remaining and some crossing, and full crossing, between the first and second optical waveguides, more further optionally wherein, according to a voltage set from the coupler switch,
i) as a zero voltage is set from the coupler switch, the transmission of optical power of a drop or cross state corresponding to the full crossing of the optical power is implemented between the first and second optical waveguides facing from the input port toward the output port,
ii) as a maximum voltage is set from the coupler switch, the transmission of optical power of a through or bar state without substantial crossing of optical power is implemented between the first and second optical waveguides facing from the input port toward the output port, and
iii) as a voltage between the zero voltage and the maximum voltage is set from the coupler switch, the transmission of optical power of dividing corresponding to some remaining and some crossing of optical power is implemented between the first and second optical waveguides facing from the input port toward the output port, or wherein,
in bit 0 of the first and second coupler control bits, transmission of optical power of a drop or cross state corresponding to the full crossing of optical power is implemented, while achieving a phase match between the first and second optical waveguides from the input port toward the output port,
in bit 1 of the first coupler control bit and bit 0 of the second coupler control bit, transmission of the optical power in a dividing or partial coupling state corresponding to some remaining and some crossing of the optical power is implemented, while achieving a phase mismatch between the first and second optical waveguides from the input port toward the output port to partially block the transmission of the optical power, and
in bit 1 of the first and second coupler control bits, a through or bar state in which there is substantially no transmission of optical power is implemented, while achieving a phase mismatch that fully blocks transmission of optical power between the first and second optical waveguides from the input port toward the output port.

4. The photonic circuit of claim 1, wherein
the optical waveguide network is an NxN optical waveguide network that maps N input ports and N output ports to each other,
the 1-1 optical waveguide and the 2-1 optical waveguide are optical waveguides extending adjacent to each other between two different input ports among the N input ports and two different output ports among the N output ports,
the 1-2 optical waveguide and the 2-2 optical waveguide are optical waveguides extending adjacent to each other between two other different input ports among the N input ports and two other different output ports among the N output ports, and
the flow of the optical power crossing between the 1-1 optical waveguide and the 2-1 optical waveguide and the flow of the optical power crossing between the 1-2 optical waveguide and the 2-2 optical waveguide are controlled together by the same coupler switch, optionally wherein the pair of the 1-1 optical waveguide and the 1-2 optical waveguide, and the pair of the 2-1 optical waveguide and the 2-2 optical waveguide connect between the input ports to which the same display source is connected and the output ports to which the same display sink is connected, respectively, further optionally wherein the 1-1 optical waveguide and the 1-2 optical waveguide transmit an image signal including image data and an auxiliary signal including auxiliary data between the same display source and the same display sink, and the 2-1 optical waveguide and the 2-2 optical waveguide transmit an image signal including other image data and an auxiliary signal including other auxiliary data between another same display source and another same display sink.

5. The photonic circuit of claim 1, wherein the optical waveguide network includes a coupler switch including a movable coupler that connects between the input port and the output port, which are respectively formed in first and second side portions crossing to contact each other on a corner of a base substrate on which the optical waveguide network is formed, and that implements an approach/retreat operation in an approach/retreat direction along an approach direction toward the intersection point of the first optical waveguide and the second optical waveguide or a retreat direction away from the intersection point of the first optical waveguide and the second optical waveguide, so as to control transmission or optical coupling efficiency of optical power that intersects between the first optical waveguide connected to the input port and the second optical waveguide connected to the output port.

6. The photonic circuit of claim 5, wherein the movable coupler is configured to:
i) at a first position farthest from the intersection point of the first and second optical waveguides, between the first waveguide connected to the input port and the second waveguide connected to the output port, implement the transmission of optical power of a through or bar state without substantial crossing of optical power;
ii) at a third position closest to the intersection point of the first and second optical waveguides, between the first waveguide connected to the input port and the second waveguide connected to the output port, implement the transmission of optical power of a drop or cross state corresponding to full crossing of optical power; and
iii) at a second position between the first position farthest from the intersection point of the first and second optical waveguides and the third position closest to the intersection point, implement the transmission of optical power in a splitting (or dividing) or partial coupling state corresponding to some remaining and some crossing of the optical power, optionally wherein the coupler switch receives first and second coupler control bits to apply three different levels of control voltages so that the movable coupler is set to a third position closest to the intersection point of the first and second optical waveguides from the first position farthest from the intersection point of the first and second optical waveguides, further optionally wherein,
in bit 0 of the first and second coupler control bits, the movable coupler is set to the first position farthest from the intersection point of the first and second optical waveguides,
in bit 1 of the first coupler control bit and bit 0 of the second coupler control bit, the movable coupler is set to the second position from the intersection point of the first and second optical waveguides, and
in bit 1 of the first and second coupler control bits, the movable coupler is set to the third position closest to the intersection point of the first and second optical waveguides.

7. The photonic circuit of claim 5, wherein the movable coupler comprises:
a first coupling rib extending in parallel with the first optical waveguide to form evanescent coupling with the first optical waveguide; and
a second coupling rib extending in parallel with the second optical waveguide to form evanescent coupling with the second optical waveguide.

8. The photonic circuit of claim 5, wherein
an evanescent field leaking between the first optical waveguide and the movable coupler has an amplitude that decreases from the first optical waveguide toward the movable coupler, and
an evanescent field leaking between the second optical waveguide and the movable coupler has an amplitude that decreases from the movable coupler toward the second optical waveguide.

9. The photonic circuit of claim 1, wherein the optical waveguide network is an NxN optical waveguide network that maps N input ports and N output ports to each other, and includes N 1-1 optical waveguides and 1-2 optical waveguides connected to the input ports and N 2-1 optical waveguides and 2-2 optical waveguides connected to the output ports, wherein the flow of the optical power crossing between the 1-1 optical waveguide and the 2-1 optical waveguide and the flow of the optical power crossing between the 1-2 optical waveguide and the 2-2 optical waveguide are controlled together by the same coupler switch, optionally wherein the pair of the 1-1 optical waveguide and the 1-2 optical waveguide, and the pair of the 2-1 optical waveguide and the 2-2 optical waveguide connect between the input ports to which the same display source is connected and the output ports to which the same display sink is connected, further optionally wherein
the 1-1 optical waveguide and the 1-2 optical waveguide transmit an image signal including image data and an auxiliary signal including auxiliary data from the same display source, and
the 2-1 optical waveguide and the 2-2 optical waveguide transmit an image signal including image data and an auxiliary signal including auxiliary data toward the same display sink.

10. The photonic circuit of claim 1, wherein
the optical waveguide network is a 2Nx2N optical waveguide network that maps 2N input ports and 2N output ports to each other,
the input ports and the display source form a 2:1 connection so that image signals and auxiliary signals output from N display sources are input to the 2N input ports,
the output ports and the display sink form a 2:1 connection so that image signals and auxiliary signals are output toward the N display sinks in the 2N output ports, and
a pair of the image signal and the auxiliary signal input through the input ports connected to the same display source are routed or distributed toward the output ports connected to the same display sink according to a control signal applied to the coupler switch, to implement transmission of different optical power between the first and second optical waveguides which are adjacent to each other and form the optical waveguide network between the input port and the output port, optionally wherein the image signal is transmitted at a relatively high data transmission rate, and the auxiliary signal is transmitted at a relatively low data transmission rate.

11. The photonic circuit of claim 1, wherein the optical waveguides forming the optical waveguide network provide communication channels of at least two different wavelength bands.

12. The photonic circuit of claim 11, wherein
the optical waveguide that forms the optical waveguide network has a profile of an optical gain or optical loss with a full-width at half maximum (FWHM) attenuated by half of the peak value of the center wavelength band from the center wavelength band forming a single peak toward both sides, and
the optical waveguide transmits different optical signals together in wavelength bands spaced apart from each other with a wavelength separation band therebetween considering a resolution for separation between different wavelength bands forming different communication channels to prevent cross-talk with each other within a wavelength range forming the FWHM.

13. The photonic circuit of claim 12, wherein the different optical signals transmitted together through the optical waveguide include optical signals having different transmission rates, optionally wherein the different optical signals transmitted together through the optical waveguide include a first optical signal transmitted at a relatively high speed and a second optical signal transmitted at a relatively low speed, and in the profile of the optical gain or optical loss of the optical waveguide, a wavelength band of the first optical signal is relatively adjacent to a center wavelength band having a peak value, to have a low attenuation rate, and a wavelength band of the second optical signal is relatively far away from a center wavelength band having a peak value, to have a high attenuation rate.

14. The photonic circuit of claim 12, wherein the resolution for separation between different wavelength bands that form the different communication channels corresponds to the resolution of a wavelength selection filter for separating optical signals of different wavelength bands transmitted from the same optical waveguide, or a sum of the resolution of the wavelength selection filter and a marginal tolerance.

15. The photonic circuit of claim 12, wherein the optical waveguide that forms the optical waveguide network transmits four different optical signals together in different wavelength bands spaced apart from each other with a wavelength separation band therebetween within the wavelength range that forms the FWHM, optionally wherein the four different optical signals transmitted together through the optical waveguide are configured to form a first high speed channel and a second high speed channel that transmit at relatively high speed, and a first low speed channel and a second low speed channel that transmit at relatively low speed, wherein,
in the profile of the optical gain or optical loss of the optical waveguide,
the wavelength bands of the optical signals allocated to the first and second high speed channels are relatively adjacent to the center wavelength band with a peak value, to have a low attenuation rate, and
the wavelength bands of the optical signals allocated to the first and second low speed channels are relatively far away from the center wavelength band with the peak value, to have a high attenuation rate, further optionally wherein
the wavelength bands of the optical signals allocated to the first and second high speed channels are allocated symmetrically to the center wavelength band with the peak value, and
the wavelength bands of the optical signals allocated to the first and second low speed channels are allocated symmetrically to the center wavelength band with the peak value.

16. The photonic circuit of claim 12, wherein the optical waveguide that forms the optical waveguide network transmits three different optical signals together in different wavelength bands spaced apart from each other with a wavelength separation band therebetween within the wavelength range that forms the FWHM.

17. The photonic circuit of claim 16, wherein the three different optical signals transmitted together through the optical waveguide is configured to form a first high speed channel and a second high speed channel that transmit at relatively high speed, and a low speed channel that transmits at relatively low speed, wherein,
in the profile of the optical gain or optical loss of the optical waveguide,
the wavelength band of the optical signal allocated to the second high speed channel is adjacent closest to the center wavelength band with a peak value, to have a lowest attenuation rate, and
the wavelength band of the optical signal allocated to the low speed channel is spaced apart farthest from the center wavelength band with the peak value, to have a highest attenuation rate, and
the wavelength band of the optical signal allocated to the first high speed channel is farther than the wavelength band of the optical signal allocated to the second high speed channel from the center wavelength band having a peak value, but is closer to the wavelength band of the optical signal allocated to the low speed channel, to thereby have a moderate attenuation rate, optionally wherein
the wavelength band of the optical signal allocated to the first high speed channel, the wavelength band of the optical signal allocated to the second high speed channel, and the wavelength band of the optical signal allocated to the low speed channel are allocated at positions asymmetrical to each other with respect to the center wavelength band with the peak value,
the wavelength band of the optical signal allocated to the second high speed channel and the wavelength band of the optical signal allocated to the low speed channel are allocated to the wavelength range of one area of a left-half region and a right-half region around the center wavelength band with the peak value, and
the wavelength band of the optical signal allocated to the first high speed channel is allocated in a wavelength range of the other area among the left-half region and the right-half region around a center wavelength band having the peak value.
